(19) Europäisches Patentamt / European Patent Office / Office européen des brevets

(11) **EP 4 610 374 A1**

(12) **EUROPEAN PATENT APPLICATION**
published in accordance with Art. 153(4) EPC

(43) Date of publication:
**03.09.2025 Bulletin 2025/36**

(21) Application number: **23903067.9**

(22) Date of filing: **28.09.2023**

(51) International Patent Classification (IPC):
**C21D 9/00** (2006.01)   **C21D 9/46** (2006.01)
**C22C 18/00** (2006.01)   **C22C 18/04** (2006.01)
**C22C 38/00** (2006.01)   **C22C 38/60** (2006.01)

(52) Cooperative Patent Classification (CPC):
**C21D 9/00; C21D 9/46; C22C 38/00; C22C 38/60;**
C22C 18/00; C22C 18/04

(86) International application number:
**PCT/JP2023/035513**

(87) International publication number:
**WO 2024/127766 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.12.2022 JP 2022201602**

(71) Applicant: JFE Steel Corporation
**Tokyo 100-0011 (JP)**

(72) Inventors:
• **MINAMI, Hidekazu**
  **Tokyo 100-0011 (JP)**
• **YAMASHITA, Takako**
  **Tokyo 100-0011 (JP)**
• **TOJI, Yuki**
  **Tokyo 100-0011 (JP)**
• **WADA, Yusuke**
  **Tokyo 100-0011 (JP)**

(74) Representative: **Haseltine Lake Kempner LLP**
**One Portwall Square**
**Portwall Lane**
**Bristol BS1 6BH (GB)**

(54) **HIGH-STRENGTH STEEL SHEET, HIGH-STRENGTH PLATED STEEL SHEET, METHODS FOR PRODUCING SAME, AND MEMBER**

(57)    Provided is a high strength steel sheet that has excellent YR and a decreased amount of hydrogen trapped in steel under an acid immersion environment. The high-strength steel sheet has a chemical composition containing, in mass%, C: 0.030 % to 0.500 %, Si: 0.01 % to 3.00 %, Mn: 0.10 % to 6.00 %, P: 0.100 % or less, S: 0.0200 % or less, Al: 1.000 % or less, N: 0.0100 % or less, O: 0.0100 % or less, and Sb: 0.002 % to 0.300 %, with the balance being Fe and inevitable impurity. The steel microstructure at a 1/4 sheet thickness position has a martensite area fraction of 30 % or more, a ferrite area fraction of 70 % or less, and a retained austenite volume fraction of 20.0 % or less, and a surface layer concentration index of Sb is 1.2 or more.

**Description**

TECHNICAL FIELD

The present disclosure relates to a high strength steel sheet, a high strength coated or plated steel sheet, and methods of producing same, and a member.

BACKGROUND

Higher strength steel sheets for automobiles are being developed to both reduce $CO_2$ emissions by reducing vehicle weight and improve crashworthiness. Further, new laws and regulations are being introduced one after another. Therefore, in order to increase automotive body strength, the application of high strength steel sheets to major structural and reinforcing components that form the framework of automobile cabins (hereinafter also referred to as automobile frame structural components) is increasing. In particular, the application of high strength steel sheets having a tensile strength (hereinafter also referred to simply as TS) of 980 MPa or more is increasing.

Further, high strength steel sheets used for automobile frame structural components are required to have high component strength when formed into automobile frame structural components. In order to increase component strength, increasing the yield ratio (= YS/TS × 100, hereinafter also referred to simply as YR) of steel sheets is effective, for example. This increases the amount of impact energy absorbed in the event of an automobile crash.

As an example technology related to such high strength steel sheets, Patent Literature (PTL) 1 describes "a high strength hot-dip galvanized steel sheet having excellent surface quality, coating adhesion, and formability, wherein a galvanized layer is formed on a cold-rolled steel sheet comprising, in wt%, C: 0.1 % to 0.3 %, Si: 1 % to 2.5 %, Mn: 2.5 % to 8 %, sol.Al: 0.001 % to 0.5 %, P: 0.04 % or less, S: 0.015 % or less, N: 0.02 % or less (excluding 0 %), Cr: 0.1 % to 0.7 %, Mo: 0.1 % or less, Ti: (48/14)*[N] % to 0.1 %, Ni: 0.005 % to 0.5 %, Sb: 0.01 % to 0.07 %, Nb: 0.1 % or less, and B: 0.005 % or less, with the balance being Fe and other inevitable impurity, and the average Sb content in the galvanized layer from the surface of the cold-rolled steel sheet up to a depth of 0.1 μm is at least 1.5 times that at a depth of 0.5 μm or more from the surface of the cold-rolled steel sheet."

CITATION LIST

Patent Literature

PTL 1: JP 2018-505963 A

SUMMARY

(Technical Problem)

There is concern that a high strength steel sheet that has a TS of 980 MPa or more will fracture due to delayed fracture under an automobile operating environment. Therefore, it is also necessary to decrease the amount of hydrogen trapped in steel under an acid immersion environment that is more severe than an automobile operating environment.

However, the description of the high strength steel sheet in PTL 1 does not take into account the amount of hydrogen trapped in steel under an acid immersion environment. Therefore, there is a need to develop a high strength steel sheet that has excellent YR and a decreased amount of hydrogen trapped in steel under an acid immersion environment.

It would be helpful to provide a high strength steel sheet that has excellent YR and a decreased amount of hydrogen trapped in steel under an acid immersion environment.

Here, the term "high strength" means that the tensile strength (TS) measured in accordance with JIS Z 2241:2021 is 980 MPa or more.

The term "high YR (high component strength)" means that the YR measured in accordance with JIS Z 2241:2021 is 65 % or more. YR is preferably 70 % or more. YR is determined by the following Expression (1).

$$YR = YS/TS \times 100 \qquad \ldots (1)$$

The term "high bendability" means that no cracking or microfissure of less than 200 μm is observed in a bend test conducted in accordance with JIS Z 2248: 2022, evaluating whether or not cracking occurs at the tip of the bend test piece.

The term "decreased amount of hydrogen trapped in steel under an acid immersion environment" means that the amount of hydrogen trapped in steel after acid immersion is 5.00 wt.ppm or less. The amount of hydrogen trapped in steel can be measured by a conventional known method, as described in the EXAMPLES section of the present disclosure.

(Solution to Problem)

As a result of extensive studies, the inventors made the following discoveries.

(1) By adding Sb and increasing the hold time in a high temperature range in each process, the surface layer concentration index of Sb can be increased and the amount of hydrogen trapped in steel under an acid immersion environment can be decreased.
(2) By making the microstructure mainly martensite (quenched martensite and tempered martensite), high YR can be achieved.
(3) By making the volume fraction of retained austenite 20 % or less, the amount of hydrogen trapped in steel under an acid immersion environment can be decreased.

The present disclosure is based on the above discoveries. Primary features of the present disclosure are as follows.

[1] A high strength steel sheet comprising a chemical composition containing (consisting of), in mass%,

C: 0.030 % or more and 0.500 % or less,
Si: 0.01 % or more and 3.00 % or less,
Mn: 0.10 % or more and 6.00 % or less,
P: 0.100 % or less,
S: 0.0200 % or less,
Al: 1.000 % or less,
N: 0.0100 % or less,
O: 0.0100 % or less, and
Sb: 0.002 % to 0.300 %,
with the balance being Fe and inevitable impurity, wherein
the steel microstructure at a 1/4 sheet thickness position has a martensite area fraction of 30 % or more, a ferrite area fraction of 70 % or less, and a retained austenite volume fraction of 20.0 % or less, and
a surface layer concentration index of Sb is 1.2 or more.

[2] The high strength steel sheet according to [1], the chemical composition further containing, in mass%, at least one element selected from the group consisting of:

Ti: 0.200 % or less,
Nb: 0.200 % or less,
V: 0.200 % or less,
Ta: 0.10 % or less,
W: 0.10 % or less,
B: 0.0100 % or less,
Cr: 1.00 % or less,
Mo: 1.00 % or less,
Ni: 1.00 % or less,
Co: 0.010 % or less,
Cu: 1.00 % or less,
Sn: 0.200 % or less,
Ca: 0.0100 % or less,
Mg: 0.0100 % or less,
REM: 0.0100 % or less,
Zr: 0.100 % or less,
Te: 0.100 % or less,
Hf: 0.10 % or less, and
Bi: 0.200 % or less.

[3] The high strength steel sheet according to [1] or [2], wherein the maximum increase rate in C concentration from a steel sheet surface in the thickness direction is 0.1000 'mass%/$\mu$m or less.
[4] A high strength coated or plated steel sheet comprising the high strength steel sheet according to any one of [1] to [3], and a coated or plated layer on at least one side of the high strength steel sheet.

[5] A method of producing a high strength steel sheet, the method comprising:

> preparing a steel slab that has the chemical composition according to [1] or [2];
> cooling the steel slab at an average cooling rate of 1500 °C/h or less in a temperature range from 700 °C to 1000 °C;
> subsequently heating the steel slab to a slab heating temperature of 1150 °C or more with a residence time of 20 min or more in a temperature range from 1100 °C to the slab heating temperature;
> hot rolling the steel slab with a rolling reduction of 20 % or more in a first pass of finish rolling to obtain a hot-rolled sheet;
> pickling the hot-rolled sheet to obtain a pickled sheet that has an internal oxidation layer on both sides having an average thickness of 0.2 μm or more;
> cold rolling the pickled sheet to a cumulative rolling reduction ratio of 20 % to 90 %, to obtain a cold-rolled sheet;
> carrying out an annealing process to heat the cold-rolled sheet to a heating temperature of 780 °C or more, wherein an average heating rate in a temperature range from 250 °C to 700 °C is 100 °C/s or less and a residence time from 750 °C to the heating temperature is 10 s or longer; and
> subsequently carrying out a cooling process on the cold-rolled sheet.

[6] The method of producing a high strength steel sheet according to [5], where, in the annealing process, an oxygen concentration of the atmosphere from 750 °C to the heating temperature is 0.5 vol% or more and 5.0 vol% or less, and a dew point of the atmosphere is -35 °C or more.

[7] The method of producing a high strength steel sheet according to [5] or [6], where, in the cooling process applied to the cold-rolled sheet, an average cooling rate in a temperature range from 250 °C to 400 °C is 1.0 °C/s or more.

[8] The method of producing a high strength steel sheet according to any one of [5] to [7], where, in the cooling process applied to the cold-rolled sheet, the cold-rolled sheet is held at a hold temperature that is from 100 °C or more and 450 °C or less for 5 s or longer.

[9] The method of producing a high strength steel sheet according to any one of [5] to [7], where, in the cooling process applied to the cold-rolled sheet, a cooling stop temperature is 250 °C or less, and then the cold-rolled sheet is reheated to a reheating temperature that is (the cooling stop temperature + 50 °C) or more and 450 °C or less, and held at the reheating temperature for 5 s or longer.

[10] A method of producing a high strength coated or plated steel sheet, the method comprising: the method of producing a high strength steel sheet according to any one of [5] to [9], and a process of forming a coated or plated layer on at least one side of the cold-rolled sheet after the annealing process.

[11] A member comprising at least a portion of the high strength steel sheet according to any one of [1] to [4].

(Advantageous Effect)

According to the present disclosure, a high strength steel sheet can be provided that has excellent YR and a decreased amount of hydrogen trapped in steel under an acid immersion environment.

DETAILED DESCRIPTION

The following describes embodiments of the present disclosure. The embodiments described below are example embodiments of the present disclosure, and do not limit configuration to the specific examples described.

[High strength steel sheet]

First, the chemical composition of the high strength steel sheet is described. In the following description, "%" representing the content of a component element in steel means "mass%" unless otherwise specified.

[C: 0.030 % or more and 0.500 % or less]

C is one of the important basic components of steel and is particularly important in the present disclosure as an element that affects the area fraction of martensite, the area fraction of ferrite, and the volume fraction of retained austenite. When C content is less than 0.030 %, the area fraction of martensite decreases, decreasing TS and making achieving the desired YR more difficult. On the other hand, when the C content exceeds 0.500 %, the volume fraction of retained austenite increases and the amount of hydrogen trapped in steel under an acid immersion environment increases. Further, martensite embrittlement occurs, making achieving the desired bendability more difficult. The C content is therefore 0.030 % or more and 0.500 % or less. The C content is preferably 0.050 % or more. The C content is more preferably 0.070 % or more. Further, the C content is preferably 0.400 % or less. The C content is more preferably 0.300 % or less.

[Si: 0.01 % or more and 3.00 % or less]

Si is one of the important basic components of steel and is particularly important in the present disclosure for suppressing carbide formation during continuous annealing and promoting formation of retained austenite, affecting martensite hardness and the volume fraction of retained austenite. When Si content is less than 0.01 %, tempering of martensite progresses and TS decreases. On the other hand, when the Si content exceeds 3.00 %, the volume fraction of retained austenite increases and the amount of hydrogen trapped in steel under an acid immersion environment increases. Further, carbon concentration in retained austenite is excessively increased and hardness of martensite that transforms from retained austenite during bending deformation is greatly increased, resulting in decreased bendability. The Si content is therefore 0.01 % or more and 3.00 % or less. The Si content is preferably 0.05 % or more. The Si content is more preferably 0.10 % or more. Further, the Si content is preferably 2.50 % or less. The Si content is more preferably 2.00 % or less. The Si content is even more preferably 1.80 % or less. When Si is 2.50 % or less, an increase in carbon concentration in retained austenite is suitable, and therefore an increase in hardness of martensite that transforms from retained austenite during bending deformation is suitable, and excellent bendability is obtainable.

[Mn: 0.10 % or more and 6.00 % or less]

Mn is one of the important basic components of steel and is particularly important in the present disclosure as an element that affects the area fraction of martensite. When Mn content is less than 0.10 %, the area fraction of martensite decreases and achieving the desired YR is more difficult. The Mn content is therefore 0.10 % or more. On the other hand, when the Mn content exceeds 6.00 %, the maximum increase rate in C concentration from a steel sheet surface in the thickness direction exceeds $0.1000 \%/\mu m$, and in addition, bendability is decreased. The Mn content is therefore 6.00 % or less. The Mn content is preferably 0.80 % or more. The Mn content is more preferably 1.00 % or more. Further, the Mn content is preferably 5.00 % or less. The Mn content is more preferably 4.50 % or less. The Mn content is even more preferably 4.00 % or less.

[P: 0.100 % or less]

When P content is high, P segregates to prior austenite grain boundaries and embrittles the grain boundaries, and therefore ultimate deformability of the steel sheet is decreased, in addition to decreasing bendability. The P content is therefore 0.100 % or less. A lower limit of the P content is not particularly specified. P is a solid-solution-strengthening element able to increase steel sheet strength, and therefore the P content is preferably 0.001 % or more. Further, the P content is preferably 0.070 % or less.

[S: 0.0200 % or less]

When S content is high, S exists as sulfides, which in addition to decreasing the ultimate deformability of the steel sheet, also decreases bendability. The S content is therefore 0.0200 % or less. A lower limit of the S content is not particularly specified. In view of production technology constraints, the S content is preferably 0.0001 % or more. Further, the S content is preferably 0.0050 % or less.

[Al: 1.000 % or less]

When Al content is high, Al increases the $A_3$ transformation temperature and causes a large amount of ferrite to be included in the microstructure, making the desired YR difficult to achieve. The Al content is therefore 1.000 % or less. A lower limit of the Al content is not particularly specified. To inhibit carbide formation during continuous annealing and to promote formation of retained austenite, the Al content is preferably 0.001 % or more. Further, the Al content is preferably 0.500 % or less.

[N: 0.0100 % or less]

When N content is high, N exists as nitrides, which in addition to decreasing the ultimate deformability of the steel sheet, also decreases bendability. The N content is therefore 0.0100 % or less. A lower limit of the N content is not particularly specified. In view of production technology constraints, the N content is preferably 0.0001 % or more. Further, the N content is preferably 0.0050 % or less.

[O: 0.0100 % or less]

When O content is high, O exists as oxides, which in addition to decreasing the ultimate deformability of the steel sheet, also decreases bendability. The O content is therefore 0.0100 % or less. A lower limit of the O content is not particularly specified. In view of production technology constraints, the O content is preferably 0.0001 % or more. Further, the O content is preferably 0.0050 % or less.

[Sb: 0.002 % or more and 0.300 % or less]

Sb in the present disclosure is an important element that affects a surface layer concentration index of Sb and the maximum increase rate in C concentration from a steel sheet surface in the thickness direction. When Sb content is less than 0.002 %, the surface layer concentration index of Sb decreases. The Sb content is therefore 0.002 % or more. On the other hand, when the Sb content exceeds 0.300 %, the maximum increase rate in C concentration from a steel sheet surface in the thickness direction exceeds 0.1000 %/$\mu$m, resulting in decreased bendability. The Sb content is therefore 0.300 % or less. The Sb content is preferably 0.003 % or more. The Sb content is more preferably 0.004 % or more. Further, the Sb content is preferably 0.200 % or less. The Sb content is more preferably 0.150 % or less. The Sb content is even more preferably 0.100 % or less.

The high strength steel sheet has a chemical composition that consists of the above components, with the balance being Fe and inevitable impurity. Examples of inevitable impurity include Zn, Pb, As, Ge, Sr, and Cs. It is acceptable for these impurities to be present for a total content of 0.100 % or less.

The chemical composition of the high strength steel sheet may further contain, in mass%, at least one element, alone or in combination, selected from the group consisting of: Ti: 0.200 % or less, Nb: 0.200 % or less, V: 0.200 % or less, Ta: 0.10 % or less, W : 0.10 % or less, B: 0.0100 % or less, Cr: 1.00 % or less, Mo: 1.00 % or less, Ni: 1.00 % or less, Co: 0.010 % or less, Cu: 1.00 % or less, Sn: 0.200 % or less, Ca: 0.0100 % or less, Mg: 0.0100 % or less, REM: 0.0100 % or less, Zr: 0.100 % or less, Te: 0.100 % or less, Hf: 0.10 % or less, and Bi: 0.200 % or less.

When Ti content, Nb content, and V content are respectively 0.200 % or less, coarse precipitates and inclusions do not form in large amounts, the ultimate deformability of the steel sheet does not decrease, and therefore bendability does not decrease. Therefore, when included, the Ti content is preferably 0.200 % or less. When included, the Nb content is preferably 0.200 % or less. When included, the V content is preferably 0.200 % or less. The Ti content is more preferably 0.100 % or less. The Nb content is more preferably 0.100 % or less. The V content is more preferably 0.100 % or less. Lower limits of Ti, Nb, and V content are not particularly specified. Ti, Nb, and V content increases strength of the steel sheet by forming fine carbides, nitrides, and carbonitrides during hot rolling or continuous annealing, and therefore the content of each of Ti, Nb, and V is respectively preferably 0.001 % or more.

When Ta content and W content are respectively 0.10 % or less, coarse precipitates and inclusions do not form in large amounts, the ultimate deformability of the steel sheet does not decrease, and therefore bendability does not decrease. Therefore, when included, the Ta content is preferably 0.10 % or less. When included, the W content is preferably 0.10 % or less. The Ta content is more preferably 0.08 % or less. The W content is more preferably 0.08 % or less. Lower limits of Ta and W content are not particularly specified. Ta and W content increases strength of the steel sheet by forming fine carbides, nitrides, and carbonitrides during hot rolling or continuous annealing, and therefore the content of each of Ta and W is respectively preferably 0.01 % or more.

When B content is 0.0100 % or less, cracks are not caused inside the steel sheet during casting or hot rolling and the ultimate deformability of the steel sheet is not decreased, and therefore bendability does not decrease. Therefore, when included, the B content is preferably 0.0100 % or less. The B content is more preferably 0.0080 % or less. A lower limit of the B content is not particularly specified. B is an element that improves hardenability by segregating to austenite grain boundaries during annealing, and therefore the B content is preferably 0.0003 % or more.

When Cr content, Mo content, and Ni content are respectively 1.00 % or less, the amount of coarse precipitates and inclusions do not increase, the ultimate deformability of the steel sheet does not decrease, and therefore bendability does not decrease. Therefore, the Cr content is preferably 1.00 % or less. The Mo content is preferably 1.00 % or less. The Ni content is preferably 1.00 % or less. The Cr content is more preferably 0.80 % or less. The Mo content is more preferably 0.80 % or less. The Ni content is more preferably 0.80 % or less. Lower limits of Cr, Mo, and Ni content are not particularly specified. Cr, Mo, and Ni are elements that improve hardenability, and therefore the content of each of Cr, Mo, and Ni is respectively preferably 0.01 % or more.

When Co content is 0.010 % or less, the amount of coarse precipitates and inclusions does not increase, the ultimate deformability of the steel sheet does not decrease, and therefore bendability does not decrease. The Co content is therefore preferably 0.010 % or less. The Co content is more preferably 0.008 % or less. A lower limit of the Co content is not particularly specified. Co is an element that improves hardenability, and therefore the Co content is preferably 0.001 % or more.

When Cu content is 1.00 % or less, the amount of coarse precipitates and inclusions does not increase, the ultimate deformability of the steel sheet does not decrease, and therefore bendability does not decrease. The Cu content is therefore preferably 1.00 % or less. The Cu content is more preferably 0.80 % or less. A lower limit of the Cu content is not particularly specified. Cu is an element that improves hardenability, and therefore the Cu content is preferably 0.01 % or more.

When Sn content is 0.200 % or less, cracks are not caused inside the steel sheet during casting or hot rolling and the ultimate deformability of the steel sheet is not decreased, and therefore bendability does not decrease. Therefore, when included, the Sn content is preferably 0.200 % or less. The Sn content is more preferably 0.100 % or less. A lower limit of the Sn content is not particularly specified. Sn is an element that improves hardenability, and therefore the Sn content is preferably 0.001 % or more.

When Ca content, Mg content, and REM (rare earth metal) content are respectively 0.0100 % or less, the amount of coarse precipitates and inclusions do not increase, the ultimate deformability of the steel sheet does not decrease, and therefore bendability does not decrease. Therefore, when included, the Ca content is preferably 0.0100 % or less. When included, the Mg content is preferably 0.0100 % or less. When included, the REM content is preferably 0.0100 % or less. The Ca content is more preferably 0.0050 % or less. The Mg content is more preferably 0.0050 % or less. The REM content is more preferably 0.0050 % or less. Lower limits of Ca, Mg, and REM content are not particularly specified. Ca, Mg, and REM spheroidize the shape of nitrides and sulfides and improve steel sheet ultimate deformability, and therefore the content of each of Ca, Mg, and REM is respectively preferably 0.0005 % or more.

When Zr content and Te content are respectively 0.100 % or less, the amount of coarse precipitates and inclusions does not increase, the ultimate deformability of the steel sheet does not decrease, and therefore bendability does not decrease. Therefore, when included, the Zr content is preferably 0.100 % or less. When included, the Te content is preferably 0.100 % or less. The Zr content is more preferably 0.080 % or less. The Te content is more preferably 0.080 % or less. Lower limits of Zr and Te content are not particularly specified. Zr and Te are elements that spheroidize the shape of nitrides and sulfides and improve steel sheet ultimate deformability, and therefore the content of each of Zr and Te is respectively preferably 0.001 % or more.

When Hf content is 0.10 % or less, the amount of coarse precipitates and inclusions does not decrease, the ultimate deformability of the steel sheet does not decrease, and therefore bendability does not decrease. Therefore, when included, the Hf content is preferably 0.10 % or less. The Hf content is more preferably 0.08 % or less. A lower limit of the Hf content is not particularly specified. Hf is an element that spheroidizes the shape of nitrides and sulfides and improves steel sheet ultimate deformability, and therefore the Hf content is preferably 0.01 % or more.

When Bi content is 0.200 % or less, the amount of coarse precipitates and inclusions does not increase, the ultimate deformability of the steel sheet does not decrease, and therefore bendability does not decrease. Therefore, when included, the Bi content is preferably 0.200 % or less. The Bi content is more preferably 0.100 % or less. A lower limit of the Bi content is not particularly specified. Bi is an element that reduces segregation, and therefore the Bi content is preferably 0.001 % or more.

When the content of any of Ti, Nb, V, Ta, W, B, Cr, Mo, Ni, Co, Cu, Sn, Ca, Mg, REM, Zr, Te, Hf, and Bi described above is below the respective preferred lower limit, the effects of the present disclosure are not impaired, and therefore such elements are included as inevitable impurity.

Next, the microstructure of the high strength steel sheet is described.

[Area fraction of martensite: 30 % or more]

When the area fraction of martensite is 30 % or more, YR and bendability are excellent. The area fraction of martensite is therefore 30 % or more. The area fraction of martensite is preferably 45 % or more. The area fraction of martensite is more preferably 60 % or more. The area fraction of martensite is even more preferably 80 % or more. An upper limit of the area fraction of martensite is not particularly limited, and the desired properties are obtainable even when the area fraction is 100 %. Martensite here includes tempered martensite and bainite in addition to quenched martensite (fresh martensite). The observation position of the area fraction of martensite is a 1/4 sheet thickness position of the steel sheet, as described below.

[Area fraction of ferrite: 70 % or less]

By making the area fraction of ferrite 70 % or less, YR and bendability can be further improved. The area fraction of ferrite is therefore 70 % or less. The area fraction of ferrite is preferably 50 % or less. The area fraction is more preferably 40 % or less. The area fraction is even more preferably 30 % or less. A lower limit of the area fraction of ferrite is not particularly limited, and the desired properties are obtainable even when the area fraction is 0 %. Ferrite here includes bainitic ferrite. The observation position of the area fraction of ferrite is the 1/4 sheet thickness position of the steel sheet, as described below.

The area fractions of martensite (quenched martensite, tempered martensite, and bainite) and ferrite are measured as follows.

A sample is cut such that an observation plane is a thickness cross-section (L-section) parallel to the rolling direction of the steel sheet. The observation plane of the sample is then polished using diamond paste, followed by finish polishing using alumina. The observation plane of the sample is then etched with 3 vol% nital to reveal the microstructure. An observation position is then set at 1/4 sheet thickness position of the steel sheet (the position corresponding to 1/4 of the thickness in the depth direction from the steel sheet surface), and three fields of view are observed by a scanning electron microscope (SEM) at a magnification of 3000×. From the microstructure images obtained, the area fraction of each component (ferrite, martensite (quenched martensite, tempered martensite, and bainite)) divided by the measured area is calculated for three fields of view using Adobe Photoshop, available from Adobe Systems, and these values are averaged to obtain the area fraction of each microstructure. Further, in the microstructure images, ferrite is a concave microstructure that is smooth and contains no carbides, tempered martensite and bainite are concave microstructures that contain fine carbides, and quenched martensite is a convex microstructure that has fine irregularities in the interior, and these microstructures are therefore distinguishable from each other. Tempered martensite and bainite need not be distinguishable from each other, as the total area fraction is determined as the area fraction of martensite.

[Volume fraction of retained austenite: 20.0 % or less]

When the volume fraction of retained austenite is 20.0 % or less, the amount of hydrogen trapped in steel can be decreased. The volume fraction of retained austenite is therefore 20.0 % or less. Further, when the volume fraction of retained austenite is 15.0 % or less, the amount of martensite that transforms from retained austenite does not increase, and therefore excellent bendability is obtainable. The volume fraction of retained austenite is therefore preferably 15.0 % or less. The volume fraction is more preferably 10.0 % or less. The volume fraction is even more preferably 5.0 % or less. A lower limit of the volume fraction of retained austenite is not particularly limited, and the desired properties are obtainable even when the volume fraction is 0 %.

Here, the volume fraction of retained austenite is measured as follows.

After grinding, another 0.1 mm is polished by chemical polishing so that the observation plane is at a 1/4 sheet thickness position from the steel sheet surface layer. Then, the integrated reflection intensities of the (200), (220), and (311) planes of fcc iron (austenite) and the (200), (211), and (220) planes of bcc iron are measured on the observation plane using an X-ray diffraction device with a Co Kα source. The volume fraction of austenite is determined from the intensity ratio of the integrated reflection intensity from each plane of fcc iron (austenite) to the integrated reflection intensity from each plane of bcc iron, and this is taken as the volume fraction of retained austenite.

Further, the area fraction of residual microstructure other than martensite, ferrite, and retained austenite is preferably 5 % or less at the 1/4 sheet thickness position of the steel sheet. The residual microstructure includes other known microstructures of steel sheets, such as pearlite, cementite, metastable carbides (epsilon (ε) carbides, eta (η) carbides, chi (χ) carbides, and the like), and the like. Identification of the residual microstructure can be done, for example, by SEM observation.

The area fraction of the residual microstructure is calculated by the following Expression (2).

[area fraction of residual microstructure (%)] = 100 - [area fraction of martensite (%)] - [area fraction of ferrite (%)] - [volume fraction of retained austenite (%)] (2)

[Surface layer concentration index of Sb: 1.2 or more]

The surface layer concentration index of Sb is an extremely important component of the present disclosure. Increasing the surface layer concentration index of Sb, that is, enriching Sb in the surface layer, can decrease the amount of hydrogen trapped in steel under acid immersion conditions. To achieve this effect, the surface layer concentration index of Sb is 1.2 or more. The surface layer concentration index of Sb is preferably 1.3 or more. The surface layer concentration index of Sb is more preferably 1.4 or more. The surface layer concentration index of Sb is even more preferably 1.5 or more. An upper limit of the surface layer concentration index of Sb is not particularly limited. In order to control the maximum increase rate in C concentration from the steel sheet surface in the thickness direction to an appropriate range, the surface layer concentration index of Sb is preferably 10.0 or less. The surface layer concentration index of Sb is more preferably 8.0 or less. The surface layer concentration index of Sb is even more preferably 6.0 or less.

Here, the method of measuring the surface layer concentration index of Sb is as follows.

A sample that is 20 mm in the rolling direction and 20 mm in the transverse direction is taken from the high strength steel sheet by shearing. A surface of the high strength steel sheet is used as the measurement surface, and Sb intensity is analyzed along the thickness direction by glow discharge optical emission spectrometry (GDS) with a back surface of 4 mm, a high frequency condition of 600 V, and a discharge condition of 2.8 hPa. The measurement results are organized as a graph of measurement time (s) vs. Sb intensity (a.u.). Local maximum and local minimum values of Sb within a range of 1.5 s from the start of measurement are determined. The surface layer concentration index of Sb is calculated by dividing the local maximum value by the local minimum value ((local maximum value of Sb)/(local minimum value of Sb)).

[Maximum increase rate in C concentration from steel sheet surface in thickness direction: 0.1000 'mass%/$\mu$m or less (preferred condition)]

The maximum increase rate in C concentration from the steel sheet surface in the thickness direction is a preferred component of the present disclosure that is necessary to achieve good bendability. The desired bendability can be achieved by decreasing the maximum increase rate in C concentration from the steel sheet surface in the thickness direction, that is, by ensuring that no locally high concentrations occur and C concentration increases gradually in a C distribution from the steel sheet surface to the steel sheet interior. To achieve this effect, the maximum increase rate in C concentration from the steel sheet surface in the thickness direction is preferably 0.1000 'mass%/$\mu$m or less. The maximum increase rate in C concentration from the steel sheet surface in the thickness direction is more preferably 0.0500 'mass%/$\mu$m or less. The maximum increase rate in C concentration is even more preferably 0.0300 mass%/ $\mu$m or less. The maximum increase rate in C concentration is most preferably 0.0100 'mass%/$\mu$m or less. A lower limit of the maximum increase rate in C concentration from the steel sheet surface in the thickness direction is not particularly limited. In order to prevent TS decrease, the maximum increase rate in C concentration is preferably 0.0001 'mass%/$\mu$m or more. The maximum increase rate in C concentration is more preferably 0.0002 mass%/ $\mu$m or more. The maximum increase rate in C concentration is even more preferably 0.0003 'mass%/$\mu$m or more.

The method of measuring the maximum increase rate in C concentration from the steel sheet surface in the thickness direction is as follows. A sample is cut from the high strength steel sheet such that a thickness cross-section parallel to the rolling direction of the steel sheet (L-section) becomes an observation plane. The observation plane of the sample is then polished using diamond paste, followed by finish polishing using alumina. The surface layer of the steel sheet is then observed with an electron probe micro analyzer (EPMA) (EPMA-1720HT, produced by Shimadzu Corporation) to determine C concentration in three fields of view, with the settings of accelerating voltage: 15 kV, measurement region: 60 $\mu$m thick $\times$ 60 $\mu$m wide, and beam current: 50 nA. Conversion of the measurement data to C concentration is performed by a calibration curve method. Then, for the three fields of view obtained, the obtained C concentration is averaged from a region of 5 $\mu$m thickness $\times$ 60 $\mu$m width every 5 $\mu$m from the sheet thickness surface in the sheet thickness direction, from the surface layer to a thickness of 60 $\mu$m. The average C concentration obtained every 5 $\mu$m is then plotted, and the value with the largest slope is determined as the maximum increase rate of C concentration from the steel sheet surface in the thickness direction.

The steel microstructure of steel sheets is normally approximately vertically symmetrical in the thickness direction. Therefore, in identifying microstructure, and in measuring the volume fraction of retained austenite, the surface layer concentration index of Sb, and the maximum increase rate of C concentration from the surface of the steel sheet in the thickness direction, either of the surfaces (front and back surfaces) of the steel sheet may be used as a representative surface. For example, either of the surfaces (front and back surfaces) of the steel sheet may be used as the initiation point of the sheet thickness position (sheet thickness position 0) for the 1/4 sheet thickness position. The same applies hereinafter.

Thickness of the high strength steel sheet is not particularly limited. Thickness is typically 0.3 mm or more. Thickness is typically 2.8 mm or less.

[High strength coated or plated steel sheet]

The high strength coated or plated steel sheet according to an embodiment of the present disclosure includes the high strength steel sheet and a coated or plated layer formed on at least one side of the high strength steel sheet. The type of coated or plated layer is not particularly limited, and may be, for example, a hot-dip coated layer or an electroplated layer. Further, the coated or plated layer may be an alloyed coated or plated layer. The coated or plated layer is preferably a galvanized layer. The galvanized layer may contain Al and Mg. Further, hot-dip zinc-aluminum-magnesium alloy coating (Zn-Al-Mg coated layer) is also preferred. In such a case, Al content is preferably 1 mass% or more. The Al content is preferably 22 mass% or less. Mg content is preferably 0.1 mass% or more. The Mg content is preferably 10 mass% or less. The balance is preferably Zn. Further, in the case of the Zn-Al-Mg coated layer, in addition to Zn, Al, and Mg, one or more elements selected from the group consisting of Si, Ni, Ce, and La may be included to a total of 1 mass% or less. The coated or plated metal is not particularly limited, and therefore may be Al coating or plating or the like, aside from the Zn coating or plating as described above. The coated or plated layer may be on only one surface of the steel sheet or may be on both surfaces.

Further, the composition of the coated or plated layer is also not particularly limited and may be a typical composition. For example, in the case of a hot-dip galvanized layer or galvannealed layer, a typical composition consists of: Fe: 20 mass% or less, Al: 0.001 mass% to 1.0 mass%, and at least one selected from the group consisting of Pb, Sb, Si, Sn, Mg, Mn, Ni, Cr, Co, Ca, Cu, Li, Ti, Be, Bi, and REM to a total of 0 mass% to 3.5 mass%, with the balance being Zn and inevitable impurity. When a hot-dip galvanized layer, the Fe content in the coated or plated layer is preferably less than 7 mass%. When a galvannealed layer, the Fe content in the coated or plated layer is preferably from 7 mass% to 20 mass%.

Further, coating weight per side of the coated or plated layer is not particularly limited. For example, in the case of a hot-dip galvanized layer or a galvannealed layer (where the hot-dip galvanized layer is alloyed), the coating weight is preferably 20 g/m$^2$ or more. The coating weight is preferably 80 g/m$^2$ or less.

[Method of producing high strength steel sheet]

The following describes the method of producing a high strength steel sheet according to an embodiment.

First, steel material having the chemical composition described above is smelted, then a steel slab is produced. According to the present disclosure, a method of smelting the steel material is not particularly limited, and any known smelting method such as use of a converter, an electric furnace, and the like may be applied. A steel slab is preferably produced using continuous casting to prevent macro segregation, yet may be produced using other methods such as ingot casting or thin slab casting.

Next, in the process of cooling the steel slab that is 1000 °C or more, an average cooling rate in a temperature range from 700 °C to 1000 °C is 1500 °C/h or less.

[Average cooling rate in temperature range from 700 °C to 1000 °C: 1500 °C/h or less]

The average cooling rate in the temperature range from 700 °C to 1000 °C is an extremely important component of the present disclosure. By slowing the average cooling rate in the temperature range from 700 °C to 1000 °C and increasing the holding time in the temperature range, the surface layer concentration index of Sb can be increased and the maximum increase rate in C concentration from the steel sheet surface in the thickness direction can be decreased. To achieve these effects, the average cooling rate in the temperature range from 700 °C to 1000 °C is 1500 °C/h or less. A lower limit of the average cooling rate in the temperature range from 700 °C to 1000 °C is not particularly specified. In order to control the maximum increase rate in C concentration from the steel sheet surface in the thickness direction to an appropriate range, the average cooling rate is preferably 50 °C/h or more. Further, the average cooling rate in the temperature range from 700 °C to 1000 °C is preferably 1000 °C/h or less. The temperature of the steel slab here is the temperature of the surface of the steel slab.

As in a conventional method, the steel slab may be cooled once to room temperature after the above cooling and then reheated, or an energy-saving process such as hot charging may be applied. Hot charging is a process in which a warm slab is charged into a furnace without cooling to room temperature.

The steel slab is then heated to a slab heating temperature of 1150 °C or more with a residence time of 20 min or more in a temperature range from 1100 °C to the slab heating temperature.

[Slab heating temperature: 1150 °C or more]

By setting the slab heating temperature to 1150 °C or more, the surface layer concentration index of Sb can be increased and the maximum increase rate in C concentration from the steel sheet surface in the thickness direction can be decreased. To obtain these effects, the slab heating temperature is 1150 °C or more. An upper limit of the slab heating temperature is not particularly specified. In order to control the maximum increase rate in C concentration from the steel sheet surface in the thickness direction to an appropriate range, the slab heating temperature is preferably 1300 °C or less. Further, the slab heating temperature is preferably 1180 °C or more. The slab heating temperature is the temperature of the slab surface.

[Residence time from 1100 °C to slab heating temperature: 20 min or more]

By setting the residence time from 1100 °C to the slab heating temperature to 20 min or more, the surface layer concentration index of Sb can be increased and the maximum increase rate in C concentration from the steel sheet surface in the thickness direction can be decreased. To achieve these effects, the residence time from 1100 °C to the slab heating temperature is 20 min or more. An upper limit of the residence time from 1100 °C to the slab heating temperature is not particularly specified. In order to control the maximum increase rate in C concentration from the steel sheet surface in the thickness direction to an appropriate range, the residence time is preferably 300 min or less. Further, the residence time from 1100 °C to the slab heating temperature is preferably 30 min or more.

The steel slab is then hot rolled to obtain a hot-rolled sheet (hot rolling process). First, the steel slab is rough rolled into a sheet bar under typical conditions. When the slab heating temperature is low, heating the sheet bar using a bar heater or the like before finish rolling is preferable, from the viewpoint of preventing trouble during rolling. The rolling finish temperature is preferably the $Ar_3$ transformation temperature or more. Excessively lowering the rolling finish temperature leads to increased rolling load and higher rolling reduction in an un-recrystallized state of austenite. This may lead to the development of an abnormal microstructure elongated in the rolling direction, resulting in reduced workability of the steel sheet obtained after annealing. The $Ar_3$ transformation temperature is determined by the following Expression (3).

$$Ar_3 \ (°C) = 868 - 396 \times [\%C] + 24.6 \times [\%Si] - 68.1 \times [\%Mn] - 36.1 \times [\%Ni] - 20.7 \times [\%Cu] - 24.8 \times [\%Cr] \ ...(3) \qquad (3)$$

Here, [%element symbol] in Expression (3) represents the content in mass% of the element in the chemical composition described above.

Sheet bars may be joined together for continuous finish rolling. Further, a sheet bar may be temporarily coiled. Further, at least part of finish rolling may be conducted as lubrication rolling to reduce rolling load. Conducting lubrication rolling in such a manner is effective in terms of making shape and material properties of a steel sheet uniform. In lubrication rolling, the coefficient of friction is preferably 0.10 or more. The coefficient of friction is preferably 0.25 or less.

In the hot rolling, control of the rolling reduction in the first pass of the finish rolling is particularly important.

[Rolling reduction of first pass of finish rolling: 20 % or more]

By increasing the rolling reduction of the first pass of the finish rolling, large strain can be introduced at high temperature to increase the surface layer concentration index of Sb and to decrease the maximum increase rate in C concentration from the steel sheet surface in the thickness direction. To achieve these effects, the rolling reduction of the first pass of the finish rolling is 20 % or more. An upper limit of the rolling reduction of the first pass of the finish rolling is not particularly specified. In view of production technology constraints, the rolling reduction is preferably 80 % or less. Further, the rolling reduction of the first pass of the finish rolling is preferably 30 % or more.

[Average thickness of internal oxidation layer on both sides of pickled sheet after pickling: 0.2 $\mu$m or more]

After hot rolling, the hot-rolled sheet is pickled (pickling process). Increasing the average thickness of the internal oxidation layer on both sides of the pickled sheet after pickling allows the Sb enriched on the steel sheet surfaces during hot rolling to remain, thereby increasing the surface layer concentration index of Sb in the annealed sheet. Therefore, the average thickness of the internal oxidation layer on both sides of the pickled sheet after pickling is preferably 0.2 $\mu$m or more. The average thickness of the internal oxidation layer on both sides of the pickled sheet after pickling is preferably 0.3 $\mu$m or more. The average thickness is more preferably 0.4 $\mu$m or more. Further, an upper limit of the average thickness of the internal oxidation layer on both sides of the pickled sheet after pickling is not particularly specified. For better bendability, the average thickness is preferably 4.0 $\mu$m or less. The average thickness is more preferably 2.5 $\mu$m or less. A lower limit of pickling time is preferably 5 s or longer. The pickling time is more preferably 10 s or longer. An upper limit of the pickling time is preferably 200 s or less. The pickling time is more preferably 150 s or less.

Here, the method of measuring the average thickness of the internal oxidation layer on both sides of the pickled sheet after pickling is as follows. Samples are cut from the leading and trailing ends and width center portion of the coil after pickling so that a thickness cross-section (L-section) parallel to the rolling direction of the steel sheet becomes an observation plane. The observation plane of each sample is then polished using diamond paste. Front and back surfaces of the pickled sheet are then observed by SEM with a magnification of 2000x in five fields of view. Next, internal oxidation layer thickness is measured at three arbitrary locations per measured SEM photograph. Such evaluations are made for the front and back surfaces of the leading and trailing ends of the coil after pickling, measuring the internal oxidation layer thickness at 60 locations in a total of 20 fields of view. These values are averaged to obtain the average thickness of the internal oxidation layer on both sides of the pickled sheet after pickling.

After pickling, the hot-rolled steel sheet may be subjected to optional heat treatment (hot-rolled sheet annealing). Heat treatment conditions are not particularly limited, and a conventional method may be followed.

The pickled sheet is then cold rolled to obtain a cold-rolled sheet. At this time, satisfying the following conditions is important.

[Cumulative rolling reduction ratio of cold rolling: 20 % to 90 %]

By setting the cumulative rolling reduction ratio of cold rolling to 20 % or more, the surface layer concentration index of Sb when annealing can be increased and the maximum increase rate in C concentration from the steel sheet surface in the thickness direction can be decreased. On the other hand, when the cumulative rolling reduction ratio of cold rolling exceeds 90 %, the amount of austenite formed at a certain temperature during annealing increases, and C desorption from the steel sheet surface layer does not progress during annealing. This increases the maximum increase rate in C concentration from the steel sheet surface in the thickness direction, and the desired bendability cannot be achieved. Further, when the cumulative rolling reduction ratio exceeds 90 %, the area fraction of retained austenite may exceed 20 %. The cumulative rolling reduction ratio of cold rolling is therefore from 20 % to 90 %. The cumulative rolling reduction ratio of cold rolling is preferably 25 % or more. The cumulative rolling reduction ratio of cold rolling is more preferably 27 % or more. The cumulative rolling reduction ratio of cold rolling is preferably 75 % or less. The cumulative rolling reduction ratio of cold rolling is more preferably 70 % or less. The cumulative rolling reduction ratio of cold rolling is even more preferably 60 % or less. In order to introduce strain uniformly and efficiently and obtain a uniform microstructure, cold rolling is preferably applied by multi-pass rolling that requires two or more passes, such as tandem-type multi-stand rolling, reverse rolling, or the like.

The number of rolling passes and the rolling reduction of each pass are not particularly limited and a conventional method may be followed.

[Annealing process]

The cold-rolled sheet obtained as described above is annealed (annealing process). At this time, satisfying the following conditions is important.

[Average heating rate in temperature range from 250 °C to 700 °C: 100 °C/s or less]

Decreasing the average heating rate in the temperature range from 250 °C to 700 °C can increase the surface layer concentration index of Sb and decrease the maximum increase rate in C concentration from the steel sheet surface in the thickness direction. The average heating rate in the temperature range from 250 °C to 700 °C is therefore 100 °C/s or less. The average heating rate in the temperature range from 250 °C to 700 °C is preferably 80 °C/s or less. The average heating rate is more preferably 60 °C/s or less. Further, a lower limit of the average heating rate in the temperature range from 250 °C to 700 °C is not particularly specified. In order to make TS more suitable, the average heating rate is preferably 5°C/s or more. The average heating rate is more preferably 10 °C/s or more.

[Residence time from 750 °C to heating temperature: 10 s or longer]

By increasing the residence time from 750 °C to the heating temperature, the surface layer concentration index of Sb can be increased and the maximum increase rate in C concentration from the steel sheet surface in the thickness direction can be decreased. To achieve these effects, the residence time from 750 °C to the heating temperature is 10 s or longer. An upper limit of the residence time from 750 °C to the heating temperature is not particularly specified. In order to make TS more suitable, the residence time is preferably 500 s or less. The residence time from 750 °C to the heating temperature is preferably 20 s or longer. The residence time is more preferably 30 s or longer. The residence time from 750 °C to the heating temperature is more preferably 300 s or less.

[Heating temperature: 780 °C or more]

When the heating temperature (annealing temperature) is less than 780 °C, annealing treatment occurs in a two-phase range of ferrite and austenite, and a large amount of ferrite is included after annealing, making the desired YR difficult to achieve. Further, the surface layer concentration index of Sb cannot be increased. The heating temperature is therefore 780 °C or more. An upper limit of the heating temperature is not particularly specified, but when the heating temperature exceeds 980 °C, the amount of austenite formed during annealing increases, and C desorption from the steel sheet surface layer during annealing is less likely to progress. This increases the maximum increase rate in C concentration from the steel sheet surface in the thickness direction, which decreases bendability, and therefore 980 °C or less is preferred. The heating temperature is preferably 790 °C or more. The heating temperature is more preferably 800 °C or more. Further, the heating temperature is more preferably 950 °C or less. The heating temperature is measured based on the temperature of the steel sheet surface.

Holding time at the heating temperature is not particularly limited. The holding time is preferably 10 s or longer. The holding time is preferably 600 s or less.

[Oxygen concentration of atmosphere from 750 °C to heating temperature: 0.5 vol% or more and 5.0 vol% or less(preferred condition)]

During annealing, increasing the oxygen concentration at temperatures from 750 °C to the heating temperature allows decarburization to proceed via oxygen in the air, further decreasing the maximum increase rate in C concentration from the steel sheet surface in the thickness direction. To achieve these effects, the oxygen concentration at temperatures from 750 °C to the heating temperature is preferably 0.5 vol% or more. The oxygen concentration is more preferably 1.0 vol% or more. The oxygen concentration is more preferably 1.5 vol% or more. On the other hand, as the oxygen concentration at temperatures from 750 °C to the heating temperature increases, the maximum increase rate in C concentration from the steel sheet surface in the thickness direction decreases, resulting in a decrease in TS. Therefore, the oxygen concentration at temperatures from 750 °C to the heating temperature is preferably 5.0 vol% or less. The oxygen concentration is more preferably 4.5 vol% or less. The oxygen concentration is even more preferably 4.0 vol% or less. The temperatures from 750 °C to the heating temperature are based on the steel sheet surface temperature. That is, when the steel sheet surface temperature is from 750 °C to the heating temperature, the oxygen concentration is adjusted to a range described above.

[Dew point of atmosphere at temperatures from 750 °C to heating temperature: -35 °C or more (preferred condition)]

During annealing, increasing the dew point of the atmosphere at temperatures from 750 °C to the heating temperature allows decarburization to proceed via water in the air, further decreasing the maximum increase rate in C concentration from the steel sheet surface in the thickness direction. To achieve these effects, the dew point at temperatures from 750 °C to the heating temperature is preferably -35 °C or less. The dew point is more preferably -30 °C or more. The dew point is even more preferably -25 °C or more. An upper limit of the dew point of the atmosphere at temperatures from 750 °C to the heating temperature is not particularly specified. When the dew point exceeds 15 °C, the maximum increase rate in C concentration from the steel sheet surface in the thickness direction decreases and TS decreases, and therefore the dew point of the atmosphere at temperatures from 750 °C to the heating temperature is preferably 15 °C or less. The dew point is more preferably 5 °C or less. The temperatures from 750 °C to the heating temperature are based on the steel sheet surface temperature. That is, when the steel sheet surface temperature is from 750 °C to the heating temperature, the dew point is adjusted to a range described above.

[Cooling process]

After the annealing process, the cold-rolled sheet is optionally cooled (cooling process). The average cooling rate from the heating temperature to 400 °C is not particularly limited. The average cooling rate is preferably 5 °C/s or more. The average cooling rate is preferably 30 °C/s or less. Further, in the temperature range from 400 °C to the heating temperature, the high strength steel sheet may be cooled once and the steel sheet temperature may be increased again. Hereinafter, "cooling stop temperature" refers to the temperature at which management of cooling rate and holding temperature is stopped after the temperature falls below 400 °C for the first time in the cooling process.

[Average cooling rate in temperature range from 250 °C to 400 °C: 1.0 °C/s or more (preferred condition)]

The average cooling rate in the temperature range from 250 °C to 400 °C is preferably 1.0 °C/s or more. The average cooling rate is more preferably 2.0 °C/s or more. The average cooling rate is even more preferably 3.0 °C/s or more. When the average cooling rate in the temperature range from 250 °C to 400 °C is 1.0 °C/s or more, the amount of bainitic ferrite contained after annealing can be further decreased, and YR and bendability can be further improved. An upper limit of the average cooling rate in the temperature range from 250 °C to 400 °C is not particularly specified. In view of production technology constraints, the average cooling rate in the temperature range from 250 °C to 400 °C is preferably 100.0 °C/s or less. The average cooling rate is more preferably 80.0 °C/s or less. When the cooling stop temperature exceeds 250 °C, the average cooling rate is a value in the temperature range from the cooling stop temperature to 400 °C. The average cooling rate is measured based on the temperature of the steel sheet surface.

As a cooling method in the temperature range from 250 °C to 400 °C, gas jet cooling, mist cooling, water cooling, air cooling, or the like may be applied.

[Hold temperature in cooling process: 100 °C or more and 450 °C or less (preferred condition)]

In the cooling process, temperature is preferably held at a hold temperature that is 100 °C or more and 450 °C or less for 5 s or longer. By holding the high strength steel sheet at a temperature in the above temperature range, YR and bendability can be brought into more suitable ranges. Further, the area fraction of bainitic ferrite can be further decreased, and TS can be further improved. In the cooling process, the hold temperature is more preferably 150 °C or more. The hold temperature is even more preferably 200 °C or more. Further, in the cooling process, the hold temperature is more preferably 400 °C or less. The hold temperature is even more preferably 350 °C or less. The temperature in the cooling process is based on the steel sheet surface temperature.

[Holding time in cooling process: 5 s or longer (preferred condition)]

By holding at the hold temperature during the cooling process, YR and bendability can be brought into more suitable ranges. To achieve these effects, the holding time at the hold temperature in the cooling process is preferably 5 s or longer. The holding time is more preferably 10 s or longer. The holding time is even more preferably 15 s or longer. An upper limit of the holding time at the hold temperature in the cooling process is not particularly specified. In order to bring TS into a more suitable range, the holding time at the hold temperature in the cooling process is preferably 500 s or less. The holding time is more preferably 250 s or less.

[Cooling stop temperature: 250 °C or less (preferred condition)]

In the cooling process described above, the cooling stop temperature is preferably 250 °C or less. The cooling stop temperature is more preferably 200 °C or less. When the cooling stop temperature is 250 °C or less, the formation of a large amount of retained austenite after annealing can be prevented and bendability can be further improved. A lower limit of the cooling stop temperature is not particularly specified. From the viewpoint of productivity, the cooling stop temperature is preferably room temperature or more. The cooling stop temperature is measured based on the temperature of the steel sheet surface.

When the cooling stop temperature is less than 250 °C, the average cooling rate from 250 °C to the cooling stop temperature is not particularly specified. However, to further improve TS, the average cooling rate from 250 °C to the cooling stop temperature is preferably 1 °C/s or more. The average cooling rate is more preferably 2 °C/s or more. On the other hand, in view of production technology constraints, the average cooling rate from 250 °C to the cooling stop temperature is preferably 1000 °C/s or less. The average cooling rate is more preferably 150 °C/s or less.

The cold-rolled sheet may be cooled from the cooling stop temperature to room temperature. The average cooling rate from the cooling stop temperature to room temperature is not particularly limited and cooling to room temperature may be achieved by any method. As a cooling method, gas jet cooling, mist cooling, water cooling, air cooling, or the like may be applied.

The high strength steel sheet annealed as described above may be cooled to the cooling stop temperature and then rolled. The elongation rate of rolling is preferably 0.05 % or more. The elongation rate of rolling is more preferably 0.10 % or more. By setting the elongation rate of rolling conducted after cooling to the cooling stop temperature to 0.05 % or more, YR may be controlled to the desired range. The elongation rate of rolling is preferably 2.00 % or less. The elongation rate of rolling is more preferably 1.00 % or less. By setting the elongation rate of rolling after cooling to the cooling stop temperature to 2.00 % or less, the volume fraction of retained austenite can be brought within a more suitable range, and bendability and degree of damage to shear end faces in a corrosion environment can be brought within more suitable ranges.

Rolling after cooling to the cooling stop temperature may be carried out on apparatus that is continuous with the continuous annealing line (online) or on apparatus that is discontinuous with the continuous annealing line (offline). Further, the target elongation rate may be achieved in a single rolling or more than one rolling operation may be carried out to achieve a total elongation rate from 0.05 % to 2.00 %. The rolling described here typically refers to temper rolling, but a method of processing such as repeated bending using a tension leveler or rollers is also acceptable as long as the method provides an elongation rate equivalent to that of temper rolling.

[Reheating]

[Reheating temperature: (cooling stop temperature + 50 °C) or more and 450 °C or less (preferred condition)]

After cooling to the cooling stop temperature or after further rolling after cooling to the cooling stop temperature, the high strength steel sheet may be subjected to reheating (reheating process). When temperature holding is carried out during the cooling process, the reheating process is not carried out. By reheating the high strength steel sheet, YR and bendability can be brought into more suitable ranges. To achieve these effects, the reheating temperature is preferably (cooling stop temperature + 50 °C) or more. The reheating temperature is more preferably (cooling stop temperature + 100 °C) or more. The reheating temperature is even more preferably (cooling stop temperature + 150 °C) or more. On the other hand, as the reheating temperature increases, tempering of martensite progresses and TS decreases. Therefore, the reheating temperature is preferably 450 °C or less. The reheating temperature is more preferably 400 °C or less. The reheating temperature is even more preferably 380 °C or less. The reheating temperature is based on the steel sheet surface temperature.

[Holding time at reheating temperature: 5 s or longer (preferred condition)]

By holding at the reheating temperature, YR and bendability can be brought into more suitable ranges. To achieve these effects, the holding time at the reheating temperature is preferably 5 s or longer. The holding time at the reheating temperature is more preferably 10 s or longer. The holding time at the reheating temperature is even more preferably 15 s or longer. An upper limit of the holding time at the reheating temperature is not particularly specified. In order to bring TS into a more suitable range, the holding time at the reheating temperature is preferably 500 s or less. The holding time at the reheating temperature is more preferably 250 s or less.

The cooling rate from the reheating temperature to room temperature is not particularly limited and cooling to room temperature may be achieved by any method. As a cooling method, gas jet cooling, mist cooling, water cooling, air cooling, or the like may be applied.

When the high strength steel sheet is to be traded, the high strength steel sheet is typically cooled to room temperature before being traded.

[Method of producing high strength coated or plated steel sheet]

The following describes a method of producing a high strength coated or plated steel sheet according to an embodiment of the present disclosure. The method of producing a high strength coated or plated steel sheet according to an embodiment of the present disclosure includes the method of producing a high strength steel sheet described above and a process of forming a coated or plated layer on at least one side of the cold-rolled sheet (coating or plating treatment) after the annealing process. As the coating or plating treatment, a hot-dip galvanizing treatment and a treatment of alloying after hot-dip galvanizing are examples. Further, annealing and galvanizing may be carried out continuously on a single line. Further, the coated or plated layer may be formed by electroplating such as Zn-Ni alloy electroplating, or hot-dip zinc-aluminum-magnesium alloy coating. Although the above description focuses on the case of zinc coating or plating, the type of coating or plating metal, such as Zn, Al, or the like, is not particularly limited.

When hot-dip galvanizing treatment is carried out, then preferably, the high strength steel sheet is immersed in a galvanizing bath at 440 °C to 500 °C for the hot-dip galvanizing treatment, after which coating weight adjustment is carried out using gas wiping or the like. For hot-dip galvanizing, a galvanizing bath having an Al content from 0.10 mass% to 0.23 mass% is preferably used. Further, after hot-dip galvanizing, a temperature range for alloying treatment is preferably from 470 °C to 600 °C. The temperature range for alloying treatment is more preferably from 470 °C to 560 °C. Alloying treatment at 470 °C or more provides a more suitable Zn-Fe alloying rate and more suitable productivity. Alloying treatment at 600 °C or less helps prevent untransformed austenite from transforming into pearlite, making TS more suitable. Further, electrogalvanization treatment may be carried out. Further, the coating weight is preferably 20 g/m$^2$ to 80 g/m$^2$ per side (double-sided coating or plating). A galvannealed steel sheet (GA) preferably has an Fe concentration in the coated or plated layer of 7 mass% to 15 mass%, according to the following alloying treatment.

For the coating or plating treatment, after the annealing process described above, the coating or plating treatment may be applied to the high strength steel sheet in the temperature range from 400 °C to the heating temperature without cooling the sheet, or the coating or plating treatment may be applied after the cold-rolled steel sheet is once cooled to less than 400 °C and the steel sheet temperature is again increased to 400 °C or more.

The high strength steel sheet that has undergone the coating or plating treatment described above may be rolled. The elongation rate of rolling is preferably 0.05 % or more. The elongation rate of rolling is more preferably 0.10 % or more. By setting the elongation rate of rolling conducted after the coating or plating treatment to 0.05 % or more, YR may be controlled to the desired range. The elongation rate of rolling is preferably 2.00 % or less. The elongation rate of rolling is more preferably 1.00 % or less. By setting the elongation rate of rolling after the coating or plating treatment to 2.00 % or less, the volume fraction of retained austenite can be brought within a more suitable range, and bendability and degree of damage to shear end faces in a corrosion environment can be brought within more suitable ranges.

Rolling after the coating or plating treatment may be carried out on apparatus that is continuous with the continuous annealing line (online) or on apparatus that is discontinuous with the continuous annealing line (offline). Further, the target elongation rate may be achieved in a single rolling or more than one rolling operation may be carried out to achieve a total elongation rate from 0.05 % to 2.00 %. The rolling described here typically refers to temper rolling, but a method of processing such as repeated bending using a tension leveler or rollers is also acceptable as long as the method provides an elongation rate equivalent to that of temper rolling. Further, reheating treatment may be applied after the rolling after the coating or plating treatment.

Although other production conditions are not particularly limited, from the perspective of productivity, the series of processes including the annealing, hot-dip galvanizing, and alloying treatment described above may preferably be carried out in a continuous galvanizing line (CGL) that is a hot-dip galvanizing line. After the hot-dip galvanizing, wiping may be carried out for adjusting the coating amount. Conditions other than the above, such as coating conditions, may be determined in accordance with conventional hot-dip galvanizing methods.

When the high strength coated or plated steel sheet is to be traded, the high strength steel sheet is typically cooled to room temperature before being traded.

Production conditions other than those described above may be determined according to conventional methods.

[Member]

A member according to an embodiment of the present disclosure is described below.

The member according to an embodiment of the present disclosure is a member formed using the high strength steel sheet or the high strength coated or plated steel sheet according to an embodiment of the present disclosure described above. The member according to an embodiment of the present disclosure is, for example, the high strength steel sheet according to an embodiment of the present disclosure described above, formed into a desired shape by press working or the like. The member according to an embodiment of the present disclosure is suitable for use as an automobile frame structural component or as an automobile reinforcing component.

Here, the high strength steel sheet according to an embodiment of the present disclosure is a high strength steel sheet that has excellent YR and bendability and a decreased amount of hydrogen trapped in steel under an acid immersion environment. Therefore, the member according to an embodiment of the present disclosure can contribute to weight reduction of an automotive body, and can be particularly suitable for general use as a member for an automobile frame structural component or an automobile reinforcing component.

EXAMPLES

Steels having the chemical compositions listed in Table 1, each with the balance consisting of Fe and inevitable impurity, were prepared by steelmaking in a converter and formed into slabs by continuous casting. Steel slabs at 1000 °C or more were cooled to room temperature, heated, and then hot rolled to obtain hot-rolled sheets. After pickling treatment was applied to the hot-rolled sheets, cold rolling was applied to obtain cold-rolled sheets. The cold-rolled sheets were then annealed. Table 2 lists the post-casting cooling conditions, hot rolling conditions, pickling conditions, cold rolling conditions, and annealing conditions.

[Table 1]

Table 1

| Steel sample ID | Chemical composition (mass%) | | | | | | | | | | | | | | | | | | | | | | | | | | | Remarks |
|---|---|---|---|---|---|---|---|---|---|---|---|---|---|---|---|---|---|---|---|---|---|---|---|---|---|---|---|---|
| | C | Si | Mn | P | S | Al | N | O | Sb | Ti | Nb | V | Ta | W | B | Cr | Mo | Ni | Co | Cu | Sn | Ca | Mg | REM | Zr | Te | Hf | Bi | |
| A | 0.198 | 0.93 | 2.98 | 0.011 | 0.0017 | 0.032 | 0.0035 | 0.0006 | 0.014 | - | - | - | - | - | - | - | - | - | - | - | - | - | - | - | - | - | - | - | Conforming steel |
| B | 0.291 | 0.03 | 2.74 | 0.033 | 0.0049 | 0.040 | 0.0038 | 0.0009 | 0.008 | - | - | - | - | - | - | - | - | - | - | - | - | - | - | - | - | - | - | - | Conforming steel |
| C | 0.107 | 0.28 | 2.47 | 0.013 | 0.0042 | 0.028 | 0.0043 | 0.0013 | 0.030 | - | - | - | - | - | - | - | - | - | - | - | - | - | - | - | - | - | - | - | Conforming steel |
| D | 0.352 | 0.96 | 2.90 | 0.039 | 0.0033 | 0.040 | 0.0049 | 0.0009 | 0.016 | - | - | - | - | - | - | - | - | - | - | - | - | - | - | - | - | - | - | - | - | Conforming steel |
| E | 0.044 | 0.27 | 2.88 | 0.015 | 0.0005 | 0.040 | 0.0031 | 0.0006 | 0.026 | - | - | - | - | - | - | - | - | - | - | - | - | - | - | - | - | - | - | - | - | Conforming steel |
| **F** | **0.025** | 1.07 | 2.34 | 0.047 | 0.0010 | 0.048 | 0.0041 | 0.0007 | 0.029 | - | - | - | - | - | - | - | - | - | - | - | - | - | - | - | - | - | - | - | **Comparative steel** |
| G | 0.167 | 2.68 | 1.72 | 0.005 | 0.0024 | 0.047 | 0.0027 | 0.0009 | 0.007 | - | - | - | - | - | - | - | - | - | - | - | - | - | - | - | - | - | - | - | Conforming steel |
| **H** | 0.187 | 0.77 | **0.07** | 0.031 | 0.0005 | 0.048 | 0.0045 | 0.0004 | 0.005 | - | - | - | - | - | - | - | - | - | - | - | - | - | - | - | - | - | - | - | **Comparative steel** |
| I | 0.177 | 0.85 | 5.14 | 0.037 | 0.0047 | 0.034 | 0.0046 | 0.0010 | 0.006 | - | - | - | - | - | - | - | - | - | - | - | - | - | - | - | - | - | - | - | Conforming steel |
| **J** | 0.189 | 0.95 | 2.37 | 0.047 | 0.0008 | 0.031 | 0.0043 | 0.0006 | **0.001** | - | - | - | - | - | - | - | - | - | - | - | - | - | - | - | - | - | - | - | **Comparative steel** |
| K | 0.169 | 0.83 | 1.93 | 0.027 | 0.0016 | 0.044 | 0.0042 | 0.0009 | 0.241 | - | - | - | - | - | - | - | - | - | - | - | - | - | - | - | - | - | - | - | Conforming steel |
| L | 0.187 | 1.40 | 2.78 | 0.017 | 0.0017 | 0.047 | 0.0033 | 0.0013 | 0.026 | 0.027 | - | - | - | - | - | - | - | - | - | - | - | - | - | - | - | - | - | - | Conforming steel |
| M | 0.164 | 0.70 | 2.63 | 0.045 | 0.0049 | 0.020 | 0.0030 | 0.0012 | 0.026 | - | 0.013 | - | - | - | - | - | - | - | - | - | - | - | - | - | - | - | - | - | Conforming steel |
| N | 0.172 | 0.33 | 2.56 | 0.021 | 0.0005 | 0.036 | 0.0027 | 0.0006 | 0.019 | - | - | 0.012 | - | - | - | - | - | - | - | - | - | - | - | - | - | - | - | - | Conforming steel |
| O | 0.188 | 1.04 | 2.48 | 0.044 | 0.0019 | 0.039 | 0.0036 | 0.0004 | 0.024 | - | - | - | 0.016 | 0.09 | - | - | - | - | - | - | - | - | - | - | - | - | - | - | Conforming steel |
| P | 0.280 | 0.72 | 3.01 | 0.021 | 0.0042 | 0.033 | 0.0033 | 0.0013 | 0.019 | - | 0.016 | - | 0.037 | - | - | - | - | - | - | - | - | - | - | - | - | - | - | - | Conforming steel |
| Q | 0.216 | 0.37 | 3.07 | 0.007 | 0.0002 | 0.037 | 0.0044 | 0.0005 | 0.010 | 0.036 | - | - | - | - | 0.0031 | - | - | - | - | - | - | - | - | - | - | - | - | - | Conforming steel |
| R | 0.227 | 0.73 | 2.95 | 0.022 | 0.0043 | 0.043 | 0.0047 | 0.0009 | 0.007 | - | - | - | - | - | - | 0.30 | - | - | - | - | - | - | - | - | - | - | - | - | Conforming steel |
| S | 0.212 | 0.38 | 3.27 | 0.047 | 0.0039 | 0.029 | 0.0043 | 0.0011 | 0.016 | - | - | - | - | - | - | - | 0.08 | - | - | - | - | - | - | - | - | - | - | - | Conforming steel |
| T | 0.226 | 0.39 | 3.02 | 0.036 | 0.0042 | 0.043 | 0.0030 | 0.0010 | 0.029 | - | - | - | - | - | - | - | - | 0.16 | - | - | - | - | - | - | - | - | - | - | Conforming steel |
| U | 0.183 | 0.41 | 2.74 | 0.009 | 0.0019 | 0.036 | 0.0036 | 0.0008 | 0.046 | - | - | - | - | - | - | - | - | - | 0.007 | - | - | - | - | - | - | - | - | - | Conforming steel |
| V | 0.188 | 0.11 | 2.95 | 0.018 | 0.0021 | 0.044 | 0.0040 | 0.0004 | 0.003 | - | - | - | - | - | - | - | - | - | - | 0.13 | - | - | - | - | - | - | - | - | Conforming steel |
| W | 0.136 | 0.77 | 2.60 | 0.004 | 0.0010 | 0.044 | 0.0034 | 0.0004 | 0.020 | - | - | - | - | - | - | - | - | - | - | - | 0.026 | - | - | - | - | - | - | - | Conforming steel |
| X | 0.186 | 0.75 | 2.90 | 0.013 | 0.0036 | 0.027 | 0.0032 | 0.0006 | 0.013 | - | - | - | - | - | - | - | - | - | - | - | - | 0.0008 | - | - | - | - | - | - | Conforming steel |
| Y | 0.178 | 0.83 | 3.01 | 0.014 | 0.0009 | 0.045 | 0.0042 | 0.0011 | 0.006 | - | - | - | - | - | - | - | - | - | - | - | - | - | 0.0004 | 0.0012 | - | - | - | - | Conforming steel |
| Z | 0.078 | 0.40 | 2.44 | 0.009 | 0.0043 | 0.043 | 0.0049 | 0.0013 | 0.028 | - | - | - | - | - | - | - | - | - | - | - | - | - | - | - | 0.050 | - | - | - | Conforming steel |
| a | 0.167 | 0.34 | 2.87 | 0.040 | 0.0039 | 0.030 | 0.0046 | 0.0004 | 0.018 | - | - | - | - | - | - | - | - | - | - | - | - | - | - | - | - | 0.004 | 0.05 | 0.009 | Conforming steel |
| b | 0.198 | 3.12 | 3.10 | 0.009 | 0.0019 | 0.048 | 0.0040 | 0.0010 | 0.031 | - | - | - | - | - | - | - | - | - | - | - | - | - | - | - | - | - | - | - | **Comparative steel** |

Underlining indicates a value outside the scope of the present disclosure.

[Table 2]

Table 2

| No. | Steel sample ID | Post-casting: Average cooling rate from 700°C to 1000°C (°C/h) | Hot rolling: Slab heating temp. (°C) | Hot rolling: Residence time from 1100°C to slab heating temp. (min) | Hot rolling: Rolling reduction on first pass of finish rolling (%) | Pickling: Pickling time (s) | Pickling: Average thickness of internal oxidation layer on both sides (µm) | Cold rolling: Cumulative rolling reduction ratio (%) | Annealing: Average heating rate from 250°C to 700°C (°C/s) | Annealing: Residence time from 750°C to heating temp. (s) | Annealing: Heating temp. (°C) | Annealing: Oxygen concentration at 750°C to heating temp. (vol%) | Annealing: Dew point from 750°C to heating temp. (°C) | Cooling: Average cooling rate from 250°C to 400°C (°C/s) | Cooling: Hold temp. (°C) | Cooling: Hold time (s) | Cooling: Cooling stop temp. (°C) | Reheating: Reheating temp. (°C) | Reheating: Reheating temp.+hold time at U34 (s) | Surface treatment: Type | Remarks |
|---|---|---|---|---|---|---|---|---|---|---|---|---|---|---|---|---|---|---|---|---|---|
| 1 | A | 500 | 1200 | 40 | 50 | 33 | 1.8 | 50 | 20 | 30 | 840 | 2.0 | -17 | 14.7 | - | - | 50 | 350 | 50 | CR | Example |
| 2 | A | 500 | 1200 | 40 | 50 | 33 | 1.8 | 50 | 20 | 30 | 840 | 2.0 | -17 | 14.7 | 300 | 70 | - | - | - | CR | Example |
| 3 | A | 500 | 1200 | 40 | 50 | 78 | 0.7 | 50 | 20 | 30 | 840 | 2.0 | -17 | 14.7 | 150 | 120 | - | - | - | CR | Example |
| 4 | B | 1000 | 1250 | 50 | 60 | 39 | 1.6 | 40 | 40 | 100 | 850 | 2.5 | -11 | 9.8 | - | - | 80 | 250 | 100 | GA | Example |
| 5 | C | 300 | 1250 | 50 | 40 | 52 | 1.3 | 45 | 20 | 60 | 890 | 3.0 | -13 | 5.0 | - | - | Room temp. | 300 | 60 | GA | Example |
| 6 | C | 300 | 1250 | 50 | 40 | 59 | 1.1 | 45 | 20 | 60 | 890 | 3.0 | -13 | 5.0 | 350 | 60 | - | - | - | GA | Example |
| 7 | C | 300 | 1250 | 50 | 40 | 39 | 1.7 | 45 | 20 | 60 | 890 | 2.0 | -13 | 5.0 | 200 | 100 | - | - | - | GA | Example |
| 8 | C | 2000 | 1050 | 50 | 40 | 59 | 1.1 | 45 | 20 | 60 | 890 | 2.0 | -13 | 5.0 | - | - | Room temp. | 300 | 60 | GA | Comparative Example |
| 9 | C | 300 | 1250 | 5 | 40 | 67 | 0.8 | 45 | 20 | 60 | 890 | 2.0 | -13 | 5.0 | - | - | Room temp. | 300 | 60 | GA | Comparative Example |
| 10 | C | 300 | 1250 | 50 | 10 | 94 | 0.5 | 45 | 20 | 60 | 890 | 2.0 | -13 | 5.0 | - | - | Room temp. | 300 | 60 | GA | Comparative Example |
| 11 | C | 300 | 1250 | 50 | 40 | 39 | 1.6 | 45 | 120 | 60 | 890 | 2.0 | -13 | 5.0 | - | - | Room temp. | 300 | 60 | GA | Comparative Example |
| 12 | C | 300 | 1250 | 50 | 40 | 936 | 0.1 | 45 | 20 | 60 | 890 | 2.0 | -13 | 5.0 | - | - | Room temp. | 300 | 60 | GA | Comparative Example |
| 13 | C | 300 | 1250 | 50 | 40 | 39 | 1.7 | 10 | 20 | 60 | 890 | 2.0 | -13 | 5.0 | - | - | Room temp. | 300 | 60 | GA | Comparative Example |
| 14 | C | 300 | 1250 | 50 | 40 | 78 | 0.7 | 85 | 20 | 60 | 890 | 2.0 | -13 | 5.0 | - | - | Room temp. | 300 | 60 | GA | Example |
| 15 | C | 300 | 1250 | 50 | 40 | 59 | 1.0 | 45 | 20 | 60 | 890 | 2.0 | -13 | 5.0 | - | - | Room temp. | 300 | 60 | GA | Comparative Example |
| 16 | C | 300 | 1250 | 50 | 40 | 52 | 1.2 | 45 | 20 | 5 | 890 | 2.0 | -13 | 5.0 | - | - | Room temp. | 300 | 60 | GA | Comparative Example |
| 17 | C | 300 | 1250 | 50 | 40 | 47 | 1.4 | 45 | 20 | 60 | 750 | 2.0 | -13 | 5.0 | - | - | Room temp. | 300 | 60 | GA | Comparative Example |
| 18 | C | 300 | 1200 | 50 | 40 | 59 | 1.0 | 45 | 20 | 60 | 890 | 2.0 | -13 | 0.5 | - | - | Room temp. | 300 | 60 | GA | Example |
| 19 | C | 300 | 1200 | 50 | 40 | 67 | 0.8 | 45 | 20 | 30 | 890 | 2.0 | -13 | 5.0 | - | - | 300 | 300 | 100 | GA | Example |
| 20 | D | 100 | 1200 | 40 | 60 | 33 | 1.9 | 55 | 18 | 60 | 800 | 1.5 | -5 | 9.8 | - | - | Room temp. | 250 | 100 | GA | Example |
| 21 | E | 200 | 1250 | 50 | 45 | 29 | 2.1 | 60 | 5 | 60 | 780 | 3.0 | -25 | 20.4 | - | - | Room temp. | 250 | 100 | GA | Example |
| 22 | F | 300 | 1250 | 50 | 45 | 47 | 1.5 | 55 | 18 | 60 | 800 | 3.0 | -13 | 3.0 | - | - | 50 | 200 | 90 | GA | Comparative Example |
| 23 | G | 300 | 1250 | 50 | 45 | 94 | 0.5 | 55 | 18 | 60 | 800 | 3.0 | -13 | 3.0 | - | - | 50 | 200 | 90 | GA | Example |
| 24 | H | 300 | 1250 | 50 | 45 | 29 | 2.0 | 55 | 18 | 60 | 800 | 3.0 | -13 | 3.0 | - | - | 50 | 200 | 90 | GA | Example |
| 25 | I | 300 | 1250 | 50 | 45 | 59 | 1.0 | 55 | 18 | 60 | 800 | 3.0 | -13 | 3.0 | - | - | 50 | 200 | 90 | GA | Comparative Example |
| 26 | J | 300 | 1250 | 50 | 45 | 33 | 1.9 | 55 | 18 | 60 | 800 | 3.0 | -13 | 3.0 | - | - | 50 | 200 | 90 | GA | Example |
| 27 | K | 300 | 1250 | 50 | 45 | 78 | 0.6 | 50 | 18 | 60 | 800 | 2.0 | -13 | 3.0 | - | - | Room temp. | 200 | 90 | GA | Example |
| 28 | L | 500 | 1250 | 40 | 30 | 156 | 0.2 | 50 | 60 | 100 | 800 | 2.0 | -19 | 9.7 | - | - | Room temp. | 300 | 50 | GA | Example |
| 29 | M | 500 | 1250 | 40 | 30 | 94 | 0.5 | 50 | 16 | 100 | 850 | 1.5 | -25 | 10.1 | - | - | 50 | 250 | 50 | EG | Example |
| 30 | N | 500 | 1200 | 40 | 30 | 23 | 2.3 | 50 | 23 | 100 | 825 | 2.0 | -16 | 15.1 | - | - | Room temp. | 300 | 100 | GA | Example |
| 31 | O | 500 | 1200 | 100 | 30 | 33 | 1.9 | 50 | 16 | 30 | 830 | 3.0 | -16 | 10.3 | - | - | 80 | 250 | 100 | GA | Example |
| 32 | P | 200 | 1200 | 40 | 30 | 67 | 0.8 | 50 | 24 | 30 | 840 | 2.5 | -36 | 29.8 | - | - | Room temp. | 250 | 50 | GA | Example |
| 33 | Q | 500 | 1150 | 40 | 30 | 33 | 1.9 | 70 | 15 | 200 | 850 | 4.0 | -36 | 14.5 | - | - | 80 | 300 | 100 | GA | Example |
| 34 | R | 500 | 1200 | 100 | 30 | 33 | 1.9 | 55 | 14 | 60 | 830 | 3.0 | -25 | 15.2 | - | - | 100 | 250 | 100 | GA | Example |
| 35 | S | 300 | 1150 | 20 | 40 | 29 | 2.0 | 20 | 14 | 60 | 870 | 2.0 | -24 | 30.3 | - | - | 50 | 350 | 30 | CR | Example |
| 36 | T | 1500 | 1150 | 40 | 40 | 59 | 1.1 | 55 | 25 | 60 | 880 | 3.5 | -13 | 9.9 | - | - | 50 | 250 | 100 | CR | Example |
| 37 | U | 300 | 1200 | 100 | 40 | 59 | 1.1 | 55 | 10 | 60 | 900 | 3.0 | -15 | 7.9 | - | - | 50 | 350 | 30 | CR | Example |
| 38 | V | 100 | 1200 | 50 | 40 | 29 | 2.1 | 55 | 26 | 100 | 900 | 2.5 | -20 | 8.4 | - | - | 150 | 250 | 100 | GA | Example |
| 39 | W | 500 | 1150 | 50 | 20 | 52 | 1.3 | 50 | 31 | 60 | 920 | 3.0 | -15 | 3.1 | - | - | 50 | 250 | 100 | GA | Example |
| 40 | X | 300 | 1250 | 40 | 30 | 67 | 0.8 | 55 | 27 | 60 | 880 | 2.5 | -16 | 10.1 | - | - | 250 | 250 | 100 | GA | Example |
| 41 | Y | 300 | 1300 | 50 | 30 | 33 | 1.9 | 55 | 34 | 60 | 880 | 1.0 | -16 | 15.1 | - | - | 50 | 450 | 5 | GI | Example |
| 42 | Z | 200 | 1250 | 100 | 40 | 94 | 0.5 | 50 | 27 | 100 | 800 | 2.0 | -16 | 10.3 | - | - | 250 | 250 | 100 | GA | Example |
| 43 | a | 300 | 1250 | 100 | 30 | 23 | 2.2 | 75 | 27 | 100 | 850 | 2.0 | -10 | 10.3 | - | - | 50 | 300 | 100 | GA | Example |
| 44 | b | 500 | 1200 | 40 | 50 | 33 | 1.8 | 50 | 20 | 30 | 840 | 2.0 | -17 | 14.7 | - | - | 50 | 350 | 50 | GA | Comparative Example |
| 45 | A | 500 | 1200 | 40 | 50 | 33 | 1.8 | 50 | 20 | 30 | 840 | 2.0 | -17 | 14.7 | 300 | 3 | - | - | - | CR | Example |

Underlining indicates a value outside the scope of the present disclosure.

The cold-rolled sheets were then cooled under the conditions listed in Table 2, and in some cases further temperature holding or reheating was applied, to obtain high strength cold-rolled steel sheets (CR, uncoated steel sheets). Further, coating or plating treatment was applied in some cases to obtain a hot-dip galvanized steel sheet (GI), a galvannealed steel sheet (GA), or an electrogalvanized steel sheet (EG). In a case where an EG was obtained, the electrogalvanization treatment was carried out after cooling and reheating the cold-rolled sheet (that is, after obtaining a CR). In cases where GI and GA were obtained, the coating treatment was carried out after annealing, and followed by cooling and reheating. In Table 2, examples marked "-" for temperature hold conditions or reheating conditions in the cooling process mean that the treatment was not carried out. Further, in Table 2, examples marked "-" for cooling stop temperature mean that cooling was carried out after temperature holding, but the cooling stop temperature was not managed. Further, in the examples where the cooling stop temperature was not room temperature, the reheating treatment was carried out immediately after the cooling stop temperature listed in Table 2 was reached.

Used as hot-dip galvanizing baths were a zinc bath containing 0.14 mass% to 0.19 mass% of Al for GI and a zinc bath containing 0.14 mass% of Al for GA, and in each case the bath temperature was 470 °C. The coating weight was about 45 g/m$^2$ to 72 g/m$^2$ per side (double-sided coating) for GI and 45 g/m2 per side (double-sided coating) for GA. Further, for GA, the concentration of Fe in the coated layer was from 9 mass% to 12 mass%. In EG, where the coated or plated layer was a Zn-Ni plated layer, Ni content in the plated layer was from 9 mass% to 25 mass%. EG coating weight was from about 15 g/m$^2$ to 100 g/m$^2$ per side (double-sided plating).

The area fractions of martensite and ferrite, volume fraction of retained austenite, surface layer concentration index of Sb, and maximum increase rate in C concentration from the steel sheet surface in the thickness direction were determined using the high strength cold-rolled steel sheets and the high strength coated or plated steel sheets as test samples according to the methods described above. Further, the residual microstructure was observed by the method described below. The test samples were cut so that the observation plane was a sheet thickness cross-section (L-section) parallel to the rolling direction of the steel sheets. The observation plane was then mirror polished using diamond paste, followed by finish polishing using colloidal silica, and then etching with 3 vol% nital to reveal the microstructure. Under the condition of 15 kV accelerating voltage, three fields of view were observed in a 17 $\mu$m $\times$ 23 $\mu$m field of view at 5000$\times$ magnification using SEM, with observation positions at a 1/4 sheet thickness position. From the obtained microstructure images, carbides were identified as the residual microstructure. The results are listed in Table 3.

Further, tensile properties, bendability, and amount of hydrogen trapped in steel under an acid immersion environment were evaluated according to the following test methods, and the results are listed in Table 3.

[Tensile test]

Tensile testing was carried out in accordance with JIS Z 2241:2021. From the obtained steel sheets, JIS No. 5 test pieces were taken in a direction perpendicular to the rolling direction of the steel sheets, and tensile tests were conducted at a crosshead speed of $1.67 \times 10^{-1}$ mm/s to measure YS and TS. In the present disclosure, a yield ratio (YR) of 65 % or more is considered good. YR was calculated using the calculation method described with reference to Expression (1) above.

[Bend test]

The bend tests were carried out in accordance with JIS Z 2248:2022. Samples of test piece strips 30 mm wide and 100 mm long were taken from the obtained steel sheets so that a direction parallel to the rolling direction of the steel sheet was the axial direction of the bend test. Subsequently, a 90° V-bend test was carried out under the conditions that the indentation load was 100 kN and the indentation holding time was 5 s. According to the present disclosure, bendability was evaluated by the pass rate of the bend test. Where R is bend radius and t is sheet thickness, five samples were subjected to the bend test at a maximum value of R where R/t is 5 or less (for example, when sheet thickness is 1.2 mm, bend radius is 6.0 mm), and then cracking at a ridge of the tip of each bend test piece was evaluated. When all five samples did not crack, bendability was judged to be "excellent". Further, bendability was judged to be "good" when a microfissure of less than 200 $\mu$m was observed in one or more of the five samples. Further, bendability was judged to be "poor" when a microfissure of 200 $\mu$m or more was observed in one or more of the five samples. Here, the presence or absence of cracks was evaluated by measuring the ridge at the tip of the bend test piece using a digital microscope (RH-2000, produced by Hirox Co. Ltd.) at 40$\times$ magnification.

[Hydrogen trapped in steel under acid immersion environment]

From each of the obtained steel sheets, a test piece 75 mm in width (direction orthogonal to the rolling direction) and 18 mm in length (rolling direction) was obtained by shearing by a crank press so that the shear separation surface was in the direction orthogonal to the rolling direction of the base steel sheet. The shear conditions of the crank press were as follows: shear angle: 0.5 degrees and clearance: 10 %. Then, the side where the crank press sheared was ground 2 mm to obtain a test piece 75 mm wide and 16 mm long. The test piece was then immersed for 96 h in a solution of 0.1 wt% ammonium thiocyanate solution and McIlvaine buffer solution (pH 4.0), each mixed at 50 vol%, and then removed and immersed in liquid nitrogen. Then, two test piece strips 30 mm wide and 8 mm long were taken from the test piece, from the steel sheet center portion, and rust was removed with a die grinder while the steel sheet was immersed in liquid nitrogen to prevent the steel sheet temperature from rising above room temperature. The two test piece strips were put together and the amount of hydrogen released when heated was measured by thermal desorption analysis. Specifically, the test pieces were heated from room temperature to an end-point temperature of 300 °C at a heating rate of 200 °C/h, and then cooled to room temperature. A cumulative amount of hydrogen released from the test pieces in the temperature range from room temperature to 200 °C during heating (hereinafter also referred to as cumulative hydrogen released) was measured. A steel material hydrogen measurement system (JTF-20AL, produced by J-Science Lab, Co., Inc.) was used to measure the hydrogen content. The following Expression (4) was then used to calculate the amount of hydrogen trapped in steel under an acid immersion environment.

[hydrogen trapped in steel under acid immersion environment (mass ppm)] = [cumulative hydrogen released (g)] ÷ [mass of test pieces (g)] $\times 10^6$ ...(4)　　　　(4)

Further, room temperatures in the range from 10 °C to 25 °C do not have any particular effect on the measurement of the amount of hydrogen trapped in steel under an acid immersion environment. However, when the room temperature was outside the range from 10 °C to 25 °C, 25 °C is used to represent room temperature, and the cumulative hydrogen released from the test piece in the temperature range from 25 °C to 200 °C was measured.

[Table 3]

Table 3

| No. | Steel sample ID | Area fraction of M (%) | Area fraction of α (%) | Volume fraction of γ (%) | Residual microstructure | Surface layer concentration index of Sb | Maximum increase rate in C concentration from steel sheet surface in thickness direction (mass%/μm) | YS (MPa) | TS (MPa) | YR (%) | Bendability | Trapped hydrogen in steel under acid immersion environment (wt.ppm) | Remarks |
|---|---|---|---|---|---|---|---|---|---|---|---|---|---|
| 1 | A | 90 | 5 | 3.3 | θ | 2.7 | 0.0053 | 1255 | 1549 | 81 | Excellent | 2.96 | Example |
| 2 | A | 86 | 6 | 3.9 | θ | 2.2 | 0.0070 | 1116 | 1488 | 75 | Excellent | 1.03 | Example |
| 3 | A | 86 | 8 | 2.1 | θ | 2.2 | 0.0046 | 1119 | 1554 | 72 | Excellent | 1.10 | Example |
| 4 | B | 85 | 7 | 3.8 | θ | 2.7 | 0.0089 | 904 | 1256 | 72 | Excellent | 2.44 | Example |
| 5 | C | 84 | 8 | 5.5 | θ | 1.6 | 0.0073 | 1018 | 1257 | 81 | Excellent | 0.69 | Example |
| 6 | C | 86 | 6 | 5.6 | θ | 2.0 | 0.0021 | 858 | 1208 | 71 | Excellent | 1.83 | Example |
| 7 | C | 86 | 5 | 5.4 | θ | 2.0 | 0.0067 | 1040 | 1223 | 85 | Excellent | 1.19 | Example |
| 8 | C | 82 | 10 | 4.8 | θ | **1.1** | 0.1174 | 1145 | 1301 | 88 | Poor | **6.64** | **Comparative Example** |
| 9 | C | 88 | 5 | 5.0 | θ | **1.1** | 0.1170 | 862 | 1287 | 67 | Poor | **6.38** | **Comparative Example** |
| 10 | C | 85 | 7 | 5.4 | θ | **1.1** | 0.1184 | 984 | 1312 | 75 | Poor | **5.71** | **Comparative Example** |
| 11 | C | 90 | 0 | 5.2 | θ | **1.1** | 0.1140 | 1138 | 1293 | 88 | Poor | **5.43** | **Comparative Example** |
| 12 | C | 83 | 7 | 5.0 | θ | **1.1** | 0.0008 | 873 | 1196 | 73 | Excellent | **5.33** | **Comparative Example** |
| 13 | C | 87 | 4 | 5.3 | θ | **1.1** | 0.1123 | 1182 | 1313 | 90 | Poor | **5.85** | **Comparative Example** |
| 14 | C | 74 | 4 | 163 | θ | 2.4 | 0.1073 | 926 | 1203 | 77 | Poor | 4.54 | Example |

(continued)

| No. | Steel sample ID | Area fraction of M (%) | Area fraction of α (%) | Volume fraction of γ (%) | Residual microstructure | Surface layer concentration index of Sb | Maximum increase rate in C concentration from steel sheet surface in thickness direction (mass%/μm) | YS (MPa) | TS (MPa) | YR (%) | Bendability | Trapped hydrogen in steel under acid immersion environment (wt.ppm) | Remarks |
|---|---|---|---|---|---|---|---|---|---|---|---|---|---|
| 15 | C | 86 | 7 | 5.1 | θ | **1.1** | 0.1190 | 1152 | 1309 | 88 | Poor | **5.88** | Comparative Example |
| 16 | C | 85 | 7 | 5.9 | θ | **1.1** | 0.1177 | 904 | 1291 | 70 | Poor | **5.43** | Comparative Example |
| 17 | C | **19** | **75** | 4.6 | θ | **1.1** | 0.0051 | 701 | 1113 | **63** | Poor | **5.74** | Comparative Example |
| 18 | C | 30 | 61 | 5.8 | θ | 2.7 | 0.0056 | 769 | 1165 | 66 | Good | 1.53 | Example |
| 19 | C | 81 | 7 | 77 | θ | 3.1 | 0.0053 | 841 | 1294 | 65 | Good | 1.41 | Example |
| 20 | D | 95 | 0 | 163 | θ | 3.2 | 0.0039 | 1759 | 2022 | 87 | Poor | 4.22 | Example |
| 21 | E | 51 | 42 | 5.8 | θ | 2.9 | 0.0061 | 709 | 1042 | 68 | Excellent | 0.64 | Example |
| 22 | **E** | **18** | **28** | 2.0 | θ | 1.5 | 0.0071 | 509 | 796 | **64** | Poor | 2.66 | Comparative Example |
| 23 | G | 71 | 5 | 16.9 | θ | 1.8 | 0.0037 | 1273 | 1572 | 81 | Poor | 4.83 | Example |
| 24 | **H** | **9** | **87** | 1.4 | θ | 3.2 | 0.0026 | 400 | 635 | **63** | Poor | 2.98 | Comparative Example |
| 25 | I | 89 | 4 | 3.1 | θ | 2.0 | 0.1082 | 1319 | 1516 | 87 | Poor | 3.74 | Example |
| 26 | **J** | 92 | 2 | 2.5 | θ | **1.0** | 0.0002 | 997 | 1445 | 69 | Excellent | **5.96** | Comparative Example |
| 27 | K | 91 | 3 | 2.5 | θ | 18.5 | 0.1086 | 1307 | 1538 | 85 | Poor | 3.55 | Example |
| 28 | L | 89 | 4 | 3.4 | θ | 2.0 | 0.0088 | 1139 | 1560 | 73 | Excellent | 1.03 | Example |
| 29 | M | 90 | 1 | 5.6 | θ | 1.8 | 0.0087 | 1023 | 1382 | 74 | Excellent | 1.30 | Example |
| 30 | N | 89 | 2 | 3.7 | θ | 1.9 | 0.0017 | 1221 | 1545 | 79 | Excellent | 1.70 | Example |

(continued)

| No. | Steel sample ID | Area fraction of M (%) | Area fraction of $\alpha$ (%) | Volume fraction of $\gamma$ (%) | Residual microstructure | Surface layer concentration index of Sb | Maximum increase rate in C concentration from steel sheet surface in thickness direction (mass%/$\mu$m) | YS (MPa) | TS (MPa) | YR (%) | Bendability | Trapped hydrogen in steel under acid immersion environment (wt.ppm) | Remarks |
|---|---|---|---|---|---|---|---|---|---|---|---|---|---|
| 31 | O | 88 | 3 | 5.4 | $\theta$ | 1.5 | 0.0020 | 1171 | 1331 | 88 | Excellent | 2.78 | Example |
| 32 | P | 88 | 5 | 2.0 | $\theta$ | 1.5 | 0.0074 | 1576 | 1833 | 86 | Excellent | 1.38 | Example |
| 33 | Q | 93 | 1 | 2.5 | $\theta$ | 2.9 | 0.0400 | 1352 | 1536 | 88 | Good | 1.87 | Example |
| 34 | R | 92 | 1 | 3.5 | $\theta$ | 2.8 | 0.0030 | 1643 | 1826 | 90 | Excellent | 0.72 | Example |
| 35 | S | 89 | 3 | 4.0 | $\theta$ | 2.2 | 0.0040 | 1406 | 1802 | 78 | Excellent | 1.22 | Example |
| 36 | T | 91 | 3 | 2.7 | $\theta$ | 1.4 | 0.0050 | 1359 | 1861 | 73 | Excellent | 0.70 | Example |
| 37 | U | 89 | 4 | 3.3 | $\theta$ | 4.4 | 0.0080 | 1248 | 1541 | 81 | Excellent | 0.69 | Example |
| 38 | V | 90 | 3 | 3.2 | $\theta$ | 2.7 | 0.0007 | 1237 | 1546 | 80 | Excellent | 1.77 | Example |
| 39 | W | 85 | 6 | 5.2 | $\theta$ | 2.2 | 0.0031 | 1160 | 1381 | 84 | Excellent | 1.69 | Example |
| 40 | X | 89 | 4 | 2.7 | $\theta$ | 3.3 | 0.0033 | 1212 | 1515 | 80 | Excellent | 1.29 | Example |
| 41 | Y | 93 | 0 | 2.4 | $\theta$ | 3.2 | 0.0086 | 1066 | 1545 | 69 | Excellent | 2.89 | Example |
| 42 | Z | 60 | 34 | 4.7 | $\theta$ | 3.4 | 0.0082 | 789 | 1143 | 69 | Good | 1.54 | Example |
| 43 | a | 87 | 5 | 3.7 | $\theta$ | 2.8 | 0.0054 | 1121 | 1536 | 73 | Excellent | 0.99 | Example |
| 44 | b | 50 | 28 | <u>21.2</u> | $\theta$ | 27 | 0.0053 | 1151 | 1621 | 71 | Poor | <u>5.88</u> | **Comparative Example** |
| 45 | A | 88 | 6 | 3.7 | $\theta$ | 2.2 | 0.0070 | 1027 | 1488 | 69 | Good | 1.03 | Example |

Underlining indicates a value outside the scope of the present disclosure.
M: martensite, $\alpha$: ferrite, $\gamma$: retained austenite, $\theta$: cementite and/or metastable carbides

As listed in Table 3, the Examples had excellent values for YR and trapped hydrogen content in steel under an acid immersion environment. On the other hand, for the Comparative Examples, values for YR, the amount of hydrogen trapped in steel under an acid immersion environment, or both, were inferior.

Further, among the Examples, those that had a maximum increase rate in C concentration from the steel sheet surface in the thickness direction of 0.1000 'mass%/$\mu$m or less, a volume fraction of retained austenite of 15.0 % or less, and a cumulative rolling reduction ratio of 75 % or less in the cold rolling process had excellent bendability in addition to the above properties. Among automobile frame structural components, for example, crash boxes and the like have a bent portion. Therefore, from the viewpoint of formability, it is preferable to apply steel sheets that have high bendability to such components.

Although embodiments of the present disclosure have been described above, the present disclosure is not limited to the description of the embodiments that forms part of the present disclosure. That is, a person skilled in the art may make various modifications to the embodiments, Examples, operational techniques, and the like disclosed herein, and all such modifications still fall within the scope of the present disclosure. For example, in the above-described series of heat treatments in the production method disclosed herein, any apparatus or the like may be used to perform the heat treatments on the steel sheet as long as the thermal history conditions are met.

INDUSTRIAL APPLICABILITY

According to the present disclosure, a high strength steel sheet is obtainable that has excellent YR and a decreased amount of hydrogen trapped in steel under an acid immersion environment. In particular, the amount of hydrogen trapped in steel under an acid immersion environment is decreased, and therefore the high strength steel sheet is applicable to various sizes and shapes of automobile frame structural components while also obtaining high component strength. Accordingly, fuel efficiency may be improved by reducing automotive body weight, and industrial applicability is extremely high.

**Claims**

1. A high strength steel sheet comprising a chemical composition containing, in mass%,

   C: 0.030 % or more and 0.500 % or less,
   Si: 0.01 % or more and 3.00 % or less,
   Mn: 0.10 % or more and 6.00 % or less,
   P: 0.100 % or less,
   S: 0.0200 % or less,
   Al: 1.000 % or less,
   N: 0.0100 % or less,
   O: 0.0100 % or less, and
   Sb: 0.002 % or more and 0.300 % or less,
   with the balance being Fe and inevitable impurity, wherein
   the steel microstructure at a 1/4 sheet thickness position has a martensite area fraction of 30 % or more, a ferrite area fraction of 70 % or less, and a retained austenite volume fraction of 20.0 % or less, and
   a surface layer concentration index of Sb is 1.2 or more.

2. The high strength steel sheet according to claim 1, the chemical composition further containing, in mass%, at least one element selected from the group consisting of:

   Ti: 0.200 % or less,
   Nb: 0.200 % or less,
   V: 0.200 % or less,
   Ta: 0.10 % or less,
   W: 0.10 % or less,
   B: 0.0100 % or less,
   Cr: 1.00 % or less,
   Mo: 1.00 % or less,
   Ni: 1.00 % or less,
   Co: 0.010 % or less,
   Cu: 1.00 % or less,

Sn: 0.200 % or less,
Ca: 0.0100 % or less,
Mg: 0.0100 % or less,
REM: 0.0100 % or less,
Zr: 0.100 % or less,
Te: 0.100 % or less,
Hf: 0.10 % or less, and
Bi: 0.200 % or less.

3. The high strength steel sheet according to claim 1 or 2, wherein the maximum increase rate in C concentration from a steel sheet surface in the thickness direction is 0.1000 mass%/ $\mu$m or less.

4. A high strength coated or plated steel sheet comprising the high strength steel sheet according to any one of claims 1 to 3, and a coated or plated layer on at least one side of the high strength steel sheet.

5. A method of producing a high strength steel sheet, the method comprising:

preparing a steel slab at a temperature of 1000 °C or more that has the chemical composition according to claim 1 or 2;
cooling the steel slab at an average cooling rate of 1500 °C/h or less in a temperature range from 700 °C to 1000 °C;
subsequently heating the steel slab to a slab heating temperature of 1150 °C or more with a residence time of 20 min or more in a temperature range from 1100 °C to the slab heating temperature;
hot rolling the steel slab with a rolling reduction of 20 % or more in a first pass of finish rolling to obtain a hot-rolled sheet;
pickling the hot-rolled sheet to obtain a pickled sheet that has an internal oxidation layer on both sides having an average thickness of 0.2 $\mu$m or more;
cold rolling the pickled sheet to a cumulative rolling reduction ratio of 20 % to 90 %, to obtain a cold-rolled sheet;
carrying out an annealing process to heat the cold-rolled sheet to a heating temperature of 780 °C or more, wherein an average heating rate in a temperature range from 250 °C to 700 °C is 100 °C/s or less and a residence time from 750 °C to the heating temperature is 10 s or longer; and
subsequently carrying out a cooling process to cool the cold-rolled sheet.

6. The method of producing a high strength steel sheet according to claim 5, where, in the annealing process, an oxygen concentration of the atmosphere from 750 °C to the heating temperature is 0.5 vol% or more and 5.0 vol% or less, and a dew point of the atmosphere is -35 °C or more.

7. The method of producing a high strength steel sheet according to claim 5 or 6, where, in the cooling process applied to the cold-rolled sheet, an average cooling rate in a temperature range from 250 °C to 400 °C is 1.0 °C/s or more.

8. The method of producing a high strength steel sheet according to any one of claims 5 to 7, where, in the cooling process applied to the cold-rolled sheet, the cold-rolled sheet is held at a hold temperature that is 100 °C or more and 450 °C or less for 5 s or longer.

9. The method of producing a high strength steel sheet according to any one of claims 5 to 7, where, in the cooling process applied to the cold-rolled sheet, a cooling stop temperature is 250 °C or less, and then the cold-rolled sheet is reheated to a reheating temperature that is (the cooling stop temperature + 50 °C) or more and 450 °C or less, and held at the reheating temperature for 5 s or longer.

10. A method of producing a high strength coated or plated steel sheet, the method comprising: the method of producing a high strength steel sheet according to any one of claims 5 to 9; and a process of forming a coated or plated layer on at least one side of the cold-rolled sheet after the annealing process.

11. A member comprising at least a portion of the high strength steel sheet according to any one of claims 1 to 3 or the high strength coated or plated steel sheet according to claim 4.

## INTERNATIONAL SEARCH REPORT

| International application No. |
| --- |
| **PCT/JP2023/035513** |

| A. | CLASSIFICATION OF SUBJECT MATTER |
| --- | --- |

*C21D 9/00*(2006.01)i; *C21D 9/46*(2006.01)i; *C22C 18/00*(2006.01)n; *C22C 18/04*(2006.01)n; *C22C 38/00*(2006.01)i; *C22C 38/60*(2006.01)i
FI:    C22C38/00 301U; C21D9/00 101W; C21D9/46 F; C21D9/46 J; C22C38/00 301T; C22C38/60; C22C38/00 302A; C21D9/46 P; C22C18/04; C22C18/00

According to International Patent Classification (IPC) or to both national classification and IPC

| B. | FIELDS SEARCHED |
| --- | --- |

Minimum documentation searched (classification system followed by classification symbols)

C21D9/00; C21D9/46; C22C18/00; C22C18/04; C22C38/00; C22C38/60

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2018-502989 A (POSCO) 01 February 2018 (2018-02-01) | 1-11 |
| A | JP 2019-512608 A (POSCO) 16 May 2019 (2019-05-16) | 1-11 |
| A | WO 2020/184055 A1 (JFE STEEL CORPORATION) 17 September 2020 (2020-09-17) | 1-11 |

☐ Further documents are listed in the continuation of Box C.     ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **04 December 2023** | **12 December 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/035513**

| Patent document cited in search report | | | Publication date (day/month/year) | Patent family member(s) | | | Publication date (day/month/year) |
|---|---|---|---|---|---|---|---|
| JP | 2018-502989 | A | 01 February 2018 | US | 2017/0369974 | A1 | |
| | | | | WO | 2016/093598 | A1 | |
| | | | | EP | 3231887 | A1 | |
| | | | | KR | 10-1630976 | B | |
| | | | | CN | 107002207 | A | |
| JP | 2019-512608 | A | 16 May 2019 | US | 2019/0071745 | A1 | |
| | | | | WO | 2017/171366 | A1 | |
| | | | | EP | 3438315 | A1 | |
| | | | | KR | 10-2017-0113858 | A | |
| | | | | CN | 108884536 | A | |
| WO | 2020/184055 | A1 | 17 September 2020 | US | 2022/0177992 | A1 | |
| | | | | EP | 3940091 | A1 | |
| | | | | CN | 113544297 | A | |
| | | | | KR | 10-2021-0127193 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018505963 A